# EUROPÄISCHE PATENTSCHRIFT

(11) **EP 3 235 339 B1**
(45) Veröffentlichungstag und Bekanntmachung des Hinweises auf die Patenterteilung: **27.03.2019**
(21) Anmeldenummer: 15805434.6
(22) Anmeldetag: 02.12.2015
(51) Int. Cl.: H05B 3/12, H01Q 1/12, H05B 3/14, H05B 3/84

(54) **ELEKTRISCH BEHEIZBARE ANTENNENSCHEIBE SOWIE HERSTELLUNGSVERFAHREN HIERFÜR**
ELECTRICALLY HEATABLE ANTENNA DISC AND METHOD FOR PRODUCING SAME
PLAQUE D'ANTENNE POUVANT ÊTRE CHAUFFÉE ÉLECTRIQUEMENT ET SON PROCÉDÉ DE FABRICATION

(30) Priorität: 16.12.2014 EP 14198258
(43) Veröffentlichungstag der Anmeldung: 25.10.2017
(73) Patentinhaber: Saint-Gobain Glass France, 92400 Courbevoie (FR)
(72) Erfinder: DROSTE, Stefan, 52134 Herzogenrath (DE); STELLING, Bernd, 33647 Bielefeld (DE); FRANCOIS, Guillaume, 52064 Aachen (DE)
(74) Vertreter: Obermair, Christian Egbert
(86) Internationale Anmeldenummer: PCT/EP2015/078342
(87) Internationale Veröffentlichungsnummer: WO 2016/096432

(56) Entgegenhaltungen:
- EP-A1- 2 400 591
- DE-A1-102012 008 033

## Beschreibung

Die Erfindung liegt auf dem Gebiet der Scheibentechnik und betrifft eine elektrisch beheizbare Antennenscheibe sowie ein Verfahren zu deren Herstellung und deren Verwendung.

Scheiben mit transparenten, elektrisch leitfähigen Beschichtungen sind in der Patentliteratur bereits vielfach beschrieben worden. Lediglich beispielhaft sei auf die Druckschriften DE 198 58 227 C1, DE 10 2008 018 147 A1 und DE 10 2008 029 986 A1 verwiesen. In aller Regel dient die leitfähige Beschichtung zur Reflexion von Wärmestrahlen und sorgt beispielsweise in Kraftfahrzeugen oder in Gebäuden für eine Verbesserung des thermischen Komforts. Vielfach wird sie auch als Heizschicht verwendet, um eine transparente Scheibe vollflächig elektrisch zu beheizen.

Elektrisch leitfähige Beschichtungen lassen sich wegen ihrer elektrischen Leitfähigkeit auch als flächenförmige Antennen zum Empfangen von elektromagnetischen Wellen einsetzen, wie es in DE 10 106 125 A1, DE 103 19 606 A1, DE 10 2012 008 033 A1, EP 0 720 249 A2, EP 2 400 591 A1 und US 2003/0112190 A1 offenbart ist. Dazu wird die leitfähige Beschichtung mit einem Antennenanschluss als Koppelelektrode galvanisch oder kapazitiv gekoppelt und das Antennensignal im Randbereich der Scheibe zur Verfügung gestellt. Über einen Anschlussleiter, typischer Weise unter Zwischenschaltung eines Antennenverstärkers, werden die Antennensignale einem Empfangsgerät zugeführt. Als Anschlussleiter werden gewöhnlich ungeschirmte Litzendrähte oder Folienleiter eingesetzt, die zwar über einen relativ niedrigen ohmschen Widerstand verfügen und nur geringe ohmsche Leistungsverluste verursachen. Derartige Anschlussleiter lassen jedoch keine definierte Signalübertragung zu, da es durch unvermeidliche Lagetoleranzen zu undefinierten Verkopplungen mit der elektrisch leitfähigen Fahrzeugkarosserie oder benachbarten Leitern kommen kann, so dass die Schwankungsbreite wichtiger Antenneneigenschaften wie Bandbreite, Effizienz und Fußpunktimpedanz relativ groß ist. Aus diesem Grunde müssen derartige ungeschirmte Leiter möglichst kurz gehalten werden.

Durch die Verwendung spezieller Hochfrequenzleiter, welche neben einem Signalleiter mindestens einen Masseleiter mit sich führen (wie Koaxialleiter, Koplanarleiter, Mikrostreifenleiter) können Signalverluste vermieden werden. Solche Hochfrequenzleiter sind jedoch aufwändig und kostenintensiv und benötigen relativ viel Bauraum. Zudem erfordern sie eine gleichermaßen aufwändige Verbindungstechnik. In Kraftfahrzeugen ist der Antennenverstärker in der Regel mit der elektrisch leitfähigen Fahrzeugkarosserie elektrisch verbunden, wobei durch diese elektrische Verbindung ein hochfrequenztechnisch wirksames Bezugspotenzial (Masse) für das Antennensignal vorgegeben wird. Die nutzbare Antennenspannung ergibt sich aus der Differenz zwischen dem Bezugspotenzial und dem Potenzial des Antennensignals.

Die elektrisch leitfähige Beschichtung kann als flächenförmige Antenne, im Folgenden auch Flächenantenne genannt, zum Empfangen oder Senden von elektromagnetischen Wellen dienen. Im Unterschied und in Abgrenzung zur Flächenantenne verfügen linienförmige Antennen, sogenannte Linienantennen, zum Empfangen von elektromagnetischen Wellen über eine geometrische Länge (L), die deren geometrische Breite (B) um mehrere Größenordnungen übersteigt. Die geometrische Länge einer Linienantenne ist der Abstand zwischen Antennenfußpunkt und Antennenspitze, die geometrische Breite die hierzu senkrechte Abmessung. Für Linienantennen gilt in der Regel der Zusammenhang: L/B ≥ 100. Entsprechendes gilt bei Linienantennen für deren geometrische Höhe (H), worunter eine Abmessung zu verstehen ist, die sowohl senkrecht zur Länge (L) als auch senkrecht zur Breite (B) ist, in der Regel der Zusammenhang: L/H ≥ 100 gilt.

Die in konventionellen (nicht mit einer elektrisch leitfähigen Beschichtung ausgestatteten) Windschutzscheiben verbauten Antennen sind vom Typ Linienantenne, da diese auch in Windschutzscheiben von Kraftfahrzeugen eingesetzt werden dürfen, vorausgesetzt, dass sie unter Beachtung gesetzlicher Vorschriften die Sicht des Fahrers nicht beeinträchtigen. Dies kann beispielsweise durch Feindrähte mit einem Durchmesser von typischerweise 10µm bis 150µm erreicht werden. Durch Linienantennen kann im Bereich der terrestrischen Bänder II bis V ein zufriedenstellendes Antennensignal bereitgestellt werden. Gemäß einer Definition der Internationalen Fernmeldeunion (ITU=International Telecommunication Union) handelt es sich hierbei um den Frequenzbereich von 87,5 MHz bis 960 MHz (Band II: 87,5-100 MHz, Band III: 162-230 MHz, Band IV: 470-582 MHz, Band V: 582-960 MHz). Allerdings lässt sich durch Linienantennen im vorgelagerten Frequenzbereich von Band I (41-68 MHz) und bei üblichen Größen für Windschutzscheibe in Fahrzeugen keine sehr gute Empfangsleistung mehr erzielen. Gleiches gilt auch für Frequenzen unterhalb von Band I.

Andererseits kann durch die Flächenantenne eine besonders gute Empfangsleistung im Frequenzbereich von Band I und eine mit der Linienantenne vergleichbare Empfangsleistung im Frequenzbereich von Band II erzielt werden. Jedoch verschlechtert sich die Empfangsleistung der Flächenantenne bei höheren Frequenzen aufgrund des relativ hohen elektrischen Flächenwiderstands der leitfähigen Beschichtung. Bei Kraftfahrzeugen kommt als weitere Ursache eine starke kapazitive Kopplung zwischen der leitfähigen Beschichtung und der elektrisch leitfähigen Fahrzeugkarosserie hinzu. Diesem Problem kann durch einen beschichtungsfreien Randbereich entgegen gewirkt werden, der allerdings nicht beliebig breit sein darf, da der Übergang in den Randbereich im Hinblick auf ein optisch akzeptables Ergebnis durch einen opaken Maskierungsstreifen verdeckt sein sollte. Andererseits verschlechtern sich die weiteren Funktionen der leitfähigen Beschichtung, wie deren Wärmestrahlen-reflektierende Eigenschaft, mit einer Verbreiterung des Randbereichs. In der Praxis verfügt der Randbereich daher typischer Weise über eine Breite von 10 mm oder weniger.

Eine verbesserte Empfangsleistung kann mit einer Antennenscheibe erreicht werden, bei der durch eine Segmentierung der elektrisch leitfähigen Beschichtung in einer Randzone der Scheibe eine Vergrößerung des hochfrequenztechnisch effektiv wirksamen Abstands zwischen der leitfähigen Beschichtung und der elektrisch leitfähigen Fahrzeugkarosserie bewirkt wird, wie sie in der WO 2010/081589 A1 offenbart ist.

Eine weitere Verbesserung kann mit einer bandbreitenoptimierten Antennenscheibe mit einem hybriden Aufbau aus einer Flächenantenne und einer Linienantenne erzielt werden, wie sie in der WO 2001/144680 A1 offenbart ist.

Denkbar wäre auch, die Empfangsleistung der Flächenantenne durch eine Verminderung des elektrischen Flächenwiderstands zu verbessern. Dies erfordert eine Vergrößerung der Schichtdicke der leitfähigen Beschichtung, welche aber stets mit einer Verringerung der optischen Transmission einhergeht und ungeachtet der Praktikabilität aufgrund gesetzlicher Vorgaben nur eingeschränkt möglich ist.

Bei einer elektrisch beheizbaren Antennenscheibe müssen alle oben genannten Verbesserungen der Empfangsleistung und der Bandbreite mit der Heizfunktion kompatibel sein, was in der Regel konstruktive Einschränkungen mit sich bringt.

Demgegenüber besteht die Aufgabe der vorliegenden Erfindung darin, eine elektrisch beheizbare Antennenscheibe mit einer zufriedenstellenden Empfangsleistung bereitzustellen, wobei die Antennenfunktion die Heizfunktion nicht wesentlich beeinträchtigt. Diese und weitere Aufgaben werden nach dem Vorschlag der Erfindung durch eine erfindungsgemäße Antennenscheibe mit den Merkmalen des unabhängigen Patentanspruchs gelöst. Vorteilhafte Ausgestaltungen der Erfindung sind durch die Merkmale der Unteransprüche angegeben.

Die erfindungsgemäße elektrisch beheizbare Antennenscheibe umfasst zumindest:
- eine transparente Scheibe,
- eine elektrische Heizschicht, die sich zumindest über einen Teil einer Scheibenfläche erstreckt und die zumindest abschnittsweise als Flächenantenne zum Empfangen und/oder Senden von elektromagnetischen Wellen dienen kann,
- mindestens einen ersten Sammelleiter und einen zweiten Sammelleiter, wobei die Sammelleiter mit einer Spannungsquelle elektrisch verbindbar sind und mit der Heizschicht in direktem Kontakt elektrisch leitend so verbunden sind, dass nach Anlegen einer Speisespannung ein Heizstrom über ein von der Heizschicht gebildetes Heizfeld fließt,
- einen ersten Antennenanschluss, der mit der Heizschicht in direktem Kontakt elektrisch leitend verbunden ist,
- einen zweiten Antennenanschluss, der mit einem Abschnitt der Heizschicht in direktem Kontakt elektrisch leitend verbunden ist,
wobei der Abschnitt durch einen heizschichtfreien Trennbereich von der übrigen Heizschicht elektrisch für Gleichströme isoliert ist und der Abschnitt mit der angrenzenden Heizschicht kapazitiv für die Übertragung von Antennensignalen gekoppelt ist.

Dass ein Antennenanschluss in direktem Kontakt elektrisch leitend verbunden ist, bedeutet im Rahmen der Erfindung, dass zumindest ein Teilbereich der elektrisch leitfähige Bereich des Antennenanschlusses in unmittelbarem Kontakt mit einem Teilbereich der elektrisch leitfähigen Beschichtung der Heizschicht ist. Der Antennenanschluss ist also galvanisch mit der Heizschicht verbunden.

Der Erfindung liegt dabei folgendes Prinzip zugrunde: Elektrisch beheizbare Antennenscheiben weisen im einfachsten Fall eine Heizschicht auf, die durch zwei Sammelleiter kontaktiert wird. Des Weiteren wird die Heizschicht mit einem Antennenanschluss kontaktiert, um das von der Heizschicht als Flächenantenne empfangene Antennensignal abzugreifen.

Aufgrund des hohen ohmschen Flächenwiderstandes der Heizschicht, ist der als Flächenantenne wirksame Bereich der Heizschicht auf einen engen Bereich um den Antennenanschluss begrenzt. Der als Flächenantenne wirkende Bereich besteht - je nach Frequenz - nur aus einem Umkreis von wenigen Dezimetern um den Antennenanschluss.

Es wäre daher sehr vorteilhaft, durch einen zweiten Antennenanschluss, der mit der Heizschicht in direktem Kontakt elektrisch verbunden ist, einen weiteren Bereich der Heizschicht als Flächenantenne zu nutzen. Außerdem wäre es vorteilhaft, das Antennensignal des zweiten Antennenanschlusses noch möglichst auf der Scheibe über einen Verbindungsleiter mit dem Antennensignal des ersten Antennenanschlusses zusammenzuführen, so dass nur eine Antennenleitung nach außen zum Antennenverstärker notwendig ist und dadurch Leitungsverluste und der Aufwand bei Verschaltung und Verstärker minimiert werden können. Auch für die Ausgestaltung von sogenannten Schlitzantennen innerhalb der leitfähigen Schicht kann es von Vorteil sein, mit zwei galvanisch verbundenen Kontakten zu der Heizschicht zu arbeiten.

Da die Heizschicht bei elektrischer Beheizung, das heißt bei Anliegen einer Speisespannung an den Sammelleitern, ein Heizfeld mit einem bestimmten Potentialverlauf ausbildet, sind der Positionierung der beiden Antennenanschlüsse enge Grenzen gesetzt: Beide müssen in Äquipotentialbereichen des Heizfelds angeordnet sein. Wäre dies nicht der Fall, so würde der Verbindungsleiter der beiden Antennenanschlüsse zu einem Potentialausgleich zwischen beiden Antennenanschlüssen und damit zu einem Kurzschluss der Heizschicht im Heizfeld führen. Damit wäre die Heizfunktion der Antennenscheibe deutlich gemindert und unerwünschte lokal-überhitzte Stellen, sogenannte Hot-Spots, würden entstehen.

Dieses Problem wird durch einen erfindungsgemäßen Trennbereich gelöst, der einen Abschnitt der Heizschicht von der angrenzenden Heizschicht galvanisch, das heißt elektrisch für Gleichströme, isoliert. Gleichzeit wird der Trennbereich so dimensioniert, dass der Abschnitt mit der angrenzenden Heizschicht kapazitiv für die Übertragung von Antennensignalen gekoppelt ist.

Die elektrisch beheizbare Antennenscheibe der vorliegenden Erfindung umfasst mindestens eine transparente Scheibe, die durch ein elektrisch isolierendes, transparentes Substrat ausgebildet ist. Eine elektrische Heizschicht aus einer elektrisch leitfähigen, transparenten Beschichtung bedeckt zumindest einen Teil einer Scheibenfläche und dient zumindest abschnittsweise als flächenförmige Antenne (im Folgenden auch Flächenantenne oder Flächenstrahler genannt) zum Empfangen von elektromagnetischen Wellen. Die Heizschicht erstreckt sich insbesondere über das (zentrale) Sichtfeld der Scheibe und ist durch elektrische Anschlussmittel mit einer Spannungsquelle elektrisch verbindbar. Die Anschlussmittel verfügen über Außenanschlüsse, die zum Verbinden mit den beiden Polen einer Spannungsquelle vorgesehen sind. Zudem umfassen die Anschlussmittel mindestens zwei Sammelleitern, die zum Einleiten eines Heizstroms in die Heizschicht dienen und die mit der Heizschicht elektrisch so verbunden sind, dass nach Anlegen der Speisespannung ein Heizstrom über ein von der Heizschicht gebildetes Heizfeld fließt. Die Sammelleiter können beispielsweise in Form von metallischen Streifen- bzw. Bandelektroden ("Bus bars") ausgebildet sein, um den Heizstrom breit verteilt in die Heizschicht einzuleiten. Bevorzugt sind die Sammelleiter jeweils über deren volle Bandlänge hinweg mit der Heizschicht in direktem Kontakt elektrisch leitend verbunden. Im Vergleich zur hochohmigen Heizschicht haben die Sammelleitern einen relativ geringen bzw. niederohmigen elektrischen Widerstand. In einer vorteilhaften Ausgestaltung der Erfindung bestehen die Sammelleiter aus einer metallhaltigen Druckpaste, die beispielsweise mittels Siebdruck auf die Heizschicht aufgedruckt wird. Diese Maßnahme ist industriell besonders einfach und kostengünstig durchzuführen.

Die Heizschicht ist zur Verwendung als Flächenantenne geeignet ausgebildet und kann zu diesem Zweck die Scheibe großflächig bedecken. Die Antennenscheibe umfasst mindestens einen mit der Heizschicht elektrisch gekoppelten ersten Antennenanschluss zum Auskoppeln von Antennensignalen aus zumindest einen Bereich der Heizschicht, der als Flächenantenne wirkt. Der erste Antennenanschluss ist galvanisch mit der Heizschicht gekoppelt und ist bevorzugt mit der Heizschicht in direktem mechanischem und elektrischem Kontakt.

Des Weiteren umfasst die Antennenscheibe einen zweiten Antennenanschluss, der mit einem Abschnitt der Heizschicht in direktem Kontakt elektrisch leitend verbunden ist. Der Abschnitt ist durch einen heizschichtfreien Trennbereich von der übrigen Heizschicht elektrisch für Gleichströme isoliert und mit der angrenzenden Heizschicht kapazitiv für die Übertragung von Antennensignalen gekoppelt. Der heizschichtfreie Trennbereich ist vorteilhafterweise eine dünne Linie, in der die Heizschicht entfernt wurde, beispielsweise durch Laserabtragung. Dies ist industriell besonders einfach und kostengünstig durchzuführen.

In einer vorteilhaften Weiterbildung der erfindungsgemäßen Antennenscheibe verbindet mindestens ein Verbindungsleiter den ersten Antennenanschluss und den zweiten Antennenanschluss galvanisch miteinander. Durch diese Verbindung können die Antennensignale, die durch die beiden Antennenanschlüsse aus der Heizschicht ausgekoppelt werden, verlustarm in einem gemeinsamen Antennenfußpunkt zusammengeführt werden.

In einer vorteilhaften Weiterbildung der erfindungsgemäßen Antennenscheibe ist Verbindungsleiter auf der Scheibe und insbesondere auf der Scheibenfläche angeordnet, auf der sich auch die Heizschicht erstreckt. Dabei ist der Verbindungsleiter bevorzugt auf einem heizschichtfreien Randbereich der Scheibenfläche angeordnet. Dies hat den besonderen Vorteil, dass der Verbindungsleiter von der Heizfläche beabstandet ist und Antennensignale nahezu ungestört durch den Verbindungsleiter geleitet werden.

In einer vorteilhaften Weiterbildung der erfindungsgemäßen Antennenscheibe ist der Verbindungsleiter zumindest abschnittsweise als ungeschirmter, linienförmiger Antennenleiter ausgebildet. Der Antennenleiter dient als Linienantenne zum Empfangen von elektromagnetischen Wellen und ist zu diesem Zweck geeignet ausgebildet, das heißt, er verfügt über eine zum Empfang im gewünschten Frequenzbereich geeignete Form. Als Linienantenne erfüllt der Verbindungsleiter die eingangs genannten Bedingungen bezüglich seiner Abmessung in Erstreckungsrichtung (Länge L) und den beiden hierzu senkrechten Abmessungen (Breite B, Höhe H). Der Verbindungsleiter kann beispielsweise in Drahtform oder als Flachleiter und besonders bevorzugt als Aufdruck aus einer metallhaltigen Druckpaste ausgebildet sein.

Um eine optimale Antennenfunktion zu gewährleisten, ist der ungeschirmte, linienförmige Antennenleiter außerhalb eines durch eine Projektionsoperation definierten Raums angeordnet, welcher dadurch definiert ist, dass jeder Punkt des Raums durch eine orthogonale Parallelprojektion auf die als Projektionsfläche dienende Heizschicht bzw. Flächenantenne projizierbar ist. Da die Heizschicht nur abschnittsweise als Flächenantenne wirksam ist, dient als Projektionsfläche nur der als Flächenantenne wirksame Teil der Heizschicht. Der linienförmige Antennenleiter befindet sich somit nicht in dem durch die Projektionsoperation definierten Raum. Wie üblich sind bei der Parallelprojektion die Projektionsstrahlen zueinander parallel und treffen im rechten Winkel auf die Projektionsfläche, welche im vorliegenden Fall durch die als Flächenantenne dienende Heizschicht bzw. deren als Flächenantenne wirksamen Teil gegeben ist, wobei sich das Projektionszentrum im Unendlichen befindet. Bei einer ebenen Scheibe und einer demnach ebenen Heizschicht ist die Projektionsfläche eine die Heizschicht enthaltende Projektionsebene. Der besagte Raum wird durch eine (gedachte) Randfläche begrenzt, die am umlaufenden Rand der Heizschicht bzw. am umlaufenden Rand des als Flächenantenne wirksamen Teils der Heizschicht positioniert ist und senkrecht zur Projektionsfläche steht.

In der erfindungsgemäßen Antennenscheibe wird ein Antennenfußpunkt der Linienantenne zu einem gemeinsamen Antennenfußpunkt der Linien- und Flächenantenne. Wie üblich, umschreibt der Begriff "Antennenfußpunkt" einen elektrischen Kontakt zum Abgreifen empfangener Antennensignale, an dem insbesondere ein Bezug zu einem Referenzpotenzial (beispielsweise Masse) zur Bestimmung der Signalpegel der Antennensignale besteht.

Die erfindungsgemäße Antennenscheibe verfügt in diesem Ausgestaltungsbeispiel somit über zwei Flächenantennen und eine Linienantenne, die elektrisch miteinander gekoppelt sind, was im Sinne vorliegender Erfindung als "hybrider Antennenaufbau" bezeichnet wird. Er ermöglicht in vorteilhafter Weise eine gute Empfangsleistung mit hoher Bandbreite, welche die günstigen Empfangseigenschaften der verschiedenen als Flächenantenne wirksamen Bereiche der Heizschicht in den Frequenzbereichen der Bänder I und II mit den günstigen Empfangseigenschaften der Linienantenne des Verbindungsleiters in den Frequenzbereichen der Bänder II bis V kombiniert. Durch die Positionierung der Linienantenne außerhalb des durch orthogonale Parallelprojektion auf die Flächenantenne projizierbaren Raums kann eine elektrische Belastung der Linienantenne durch die Flächenantenne(n) in besonders vorteilhafter Weise vermieden werden. Der erfindungsgemäße hybride Antennenaufbau macht somit den vollständigen Frequenzbereich der Bänder I bis V mit einer zufrieden stellenden Empfangsleistung beispielsweise für eine als Antennenscheibe dienende Windschutzscheibe verfügbar. In der industriellen Serienfertigung kann der hybride Antennenaufbau unter Einsatz gängiger Fertigungstechniken einfach und kostengünstig hergestellt werden.

Bei einer weiteren vorteilhaften Ausgestaltung der erfindungsgemäßen Antennenscheibe ist der als linienförmiger Antennenleiter ausgebildete Verbindungsleiter für einen Empfang im Bereich der terrestrischen Bänder III-V speziell angepasst und weist zu diesem Zweck vorzugsweise eine Länge von mehr als 100 Millimeter (mm) und eine Breite von weniger als 1 mm sowie eine Höhe von weniger als 1 mm, entsprechend einem Verhältnis Länge/Breite ≥ 100 bzw. L/H ≥ 100 auf. Für den gewünschten Zweck ist es weiterhin bevorzugt, wenn der Verbindungsleiter eine Linienleitfähigkeit von weniger als 20 Ohm/m, besonders bevorzugt weniger als 10 Ohm/m, aufweist.

Bei einer weiteren vorteilhaften Ausgestaltung der erfindungsgemäßen Antennenscheibe ist der gemeinsame Antennenfußpunkt von Flächen- und Linienantenne durch einen Anschlussleiter mit einer elektronischen Signalverarbeitungseinrichtung zur Verarbeitung empfangener Antennensignale, beispielsweise einem Antennenverstärker, elektrisch leitend verbindbar, wobei der Anschlusskontakt so angeordnet ist, dass die Länge des Anschlussleiters möglichst kurz ist. Diese Maßnahme ermöglicht in vorteilhafter Weise, dass für den Anschlussleiter nicht zwingend ein spezifischer Hochfrequenzleiter mit Signalleiter und zumindest einem mitgeführten Masseleiter verwendet wird, sondern dass aufgrund der kurzen Signalübertragungsstrecke ein kostengünstiger nicht spezifisch für die Hochfrequenzleitung vorgesehener Signalleiter wie ein ungeschirmter Litzendraht oder bandförmiger Flachleiter verwendet werden kann, der zudem durch eine relativ wenig aufwändige Verbindungstechnik verbindbar ist. Hierdurch können in erheblichem Umfang Kosten bei der Herstellung der Antennenscheibe eingespart werden.

In einer vorteilhaften Weiterbildung einer erfindungsgemäßen Antennenscheibe ist entweder der erste Antennenanschluss oder der zweite Antennenanschluss mit dem ersten Sammelleiter oder dem zweiten Sammelleiter in direktem Kontakt elektrisch leitend verbunden. Dies ist besonders vorteilhaft, da der jeweilige Antennenanschluss nicht gesondert gefertigt werden muss und keine weitere Fläche der Heizschicht beansprucht. Um Kurzschlüsse oder Masseschlüsse zu vermeiden, ist bevorzugt der jeweilige erste Sammelleiter und/oder zweite Sammelleiter über zwei Filter hochfrequenztechnisch für Antennensignale von der Spannungsquelle und der Erdung der Karosse entkoppelbar.

In einer vorteilhaften Weiterbildung einer erfindungsgemäßen Antennenscheibe weist der heizschichtfreie Trennbereich einen Abstand g von 0 mm bis 200 mm, bevorzugt von 0,1 mm bis 100 mm vom zweiten Antennenanschluss auf. Besonders vorteilhaft ist es, wenn der durch den Trennbereich elektrisch isolierte Abschnitt der Heizschicht eine Fläche von gleich oder weniger als 10%, bevorzugt gleich oder weniger als 5% und besonders bevorzugt von gleich oder weniger als 1% der gesamten Fläche der Heizschicht aufweist.

In einer vorteilhaften Weiterbildung einer erfindungsgemäßen Antennenscheibe weist der Trennbereich eine Breite d von 25 µm bis 300 µm und bevorzugt 30 µm bis 140 µm aufweist. Trennbereiche mit dieser Breite bieten den Vorteil einer präzisen und einfachen elektrischen Isolierung und sind gleichzeitig für das menschliche Auge kaum sichtbar. Gleichzeitig ist deren kapazitive Kopplung ausreichend um Antennensignale der Heizschicht aus dem an dem durch den Trennbereich begrenzten Abschnitt in den Abschnitt selbst zu übertragen und somit dem zweiten Antennenleiter zuzuführen. Der Trennbereich ist bevorzugt linienförmig und mit konstanter Breite d ausgebildet. Derartige Trennbereiche lassen sich besonders einfach herstellen, beispielsweise durch Laserabtragung.

Bei einer weiteren vorteilhaften Ausgestaltung ist die erfindungsgemäße Antennenscheibe in Form einer Verbundscheibe ausgebildet. Die Verbundscheibe umfasst zwei transparente Einzelscheiben, welche einer Innen- und Außenscheibe entsprechen, die durch zumindest eine thermoplastische Klebeschicht fest miteinander verbunden sind. In diesem Fall kann sich die Heizschicht auf zumindest einer Oberfläche zumindest einer der beiden Einzelscheiben der Verbundscheibe befinden. Zudem kann die Verbundscheibe mit einer Trägerschicht versehen sein, beispielsweise eine PET-Folie, die sich zwischen den beiden Einzelscheiben befindet. Die Trägerschicht kann zusätzlich oder alternativ zu den Einzelscheiben als Träger für die Heizschicht dienen, wobei zumindest eine Oberfläche der Trägerschicht mit der Heizschicht versehen ist. Durch diese Maßnahme kann die erfindungsgemäße Antennenscheibe technisch in besonders einfacher Weise realisiert werden.

Bei einer weiteren vorteilhaften Ausgestaltung der erfindungsgemäßen Antennenscheibe befindet sich die Heizschicht auf einer Oberfläche der zumindest einen Scheibe und der Verbindungsleiter auf einer hiervon verschiedenen Oberfläche derselben oder auf einer Oberfläche einer hiervon verschiedenen Scheibe. Durch diese Maßnahme kann eine besonders einfache Herstellung der erfindungsgemäßen Antennenscheibe realisiert werden.

Bei einer vorteilhaften Ausgestaltung der erfindungsgemäßen Antennenscheibe bestehen der erste Antennenanschluss, der zweite Antennenanschluss und/oder der Verbindungsleiter aus einem Metalldraht oder einer Metallfolie.

Bei einer alternativen vorteilhaften Ausgestaltung der erfindungsgemäßen Antennenscheibe bestehen der erste Antennenanschluss, der zweite Antennenanschluss und/oder der Verbindungsleiter aus einer elektrisch leitfähigen Druckpaste, die bevorzugt im Siebdruckverfahren auf derjenigen Scheibenfläche aufgebracht ist, auf der die Heizschicht angeordnet ist. Durch diese Maßnahme kann eine besonders einfache und kostengünstige Herstellung der erfindungsgemäßen Antennenscheibe realisiert werden. Derartige elektrisch leitfähige Druckpasten sind bevorzugt metallhaltig und insbesondere silberhaltig und können des Weiteren Glasfritten enthalten.

Bei einer weiteren vorteilhaften Ausgestaltung der erfindungsgemäßen Antennenscheibe sind der erste Antennenanschluss, der zweite Antennenanschluss, die Sammelleiter und/oder der Verbindungsleiter von einer opaken Maskierungsschicht verdeckt, wodurch die optische Erscheinung der Antennenscheibe verbessert werden kann.

Bei einer weiteren vorteilhaften Ausgestaltung einer erfindungsgemäßen Antennenscheibe umfasst die Heizschicht mindestens zwei weitere flächenförmige Segmente, die durch mindestens eine elektrisch isolierende Trennlinie voneinander isoliert sind. Von besonderem Vorteil ist es, wenn eine insbesondere umlaufende Randzone der Heizschicht eine Vielzahl flächenförmiger Segmente aufweist, die durch elektrisch isolierende Trennlinien unterteilt sind. Eine derartige Ausbildung der Heizschicht ist in den bereits eingangs genannten Druckschriften WO 2010/081589 A1 und WO 2001/144680 A1 eingehend beschrieben. Insbesondere wird auf die dort offenbarte Ausgestaltung der flächenförmigen Segmente in Funktion und Form Bezug genommen.

In einer vorteilhaften Weiterbildung einer erfindungsgemäßen Antennenscheibe weist jedes der flächenförmigen Segmente eine Fläche von 0,1 mm² bis 100,0 mm², bevorzugt von 1,0 mm² bis 50,0 mm² und besonders bevorzugt von 1,0 mm² bis 25,0 mm² aufweist.

In einer weiteren vorteilhaften Weiterbildung einer erfindungsgemäßen Antennenscheibe ist der Verbindungsleiter zumindest abschnittsweise auf einem durch die flächenförmigen Segmente gebildeten Bereich angeordnet. Das heißt der Verbindungsleiter ist innerhalb eines Raums angeordnet, der durch orthogonale Parallelprojektion auf den als Projektionsfläche dienenden Bereich mit flächenförmigen Segmenten projizierbar ist. Da der Bereich der flächenförmigen Segmente die Heizschicht derart unterteilt, dass sie hochfrequenztechnisch nicht mehr als Flächenantenne wirksam ist, entkoppelt der Bereich die Heizschicht von einer beispielsweise umgebenden Fahrzeugkarosserie oder einem darauf angeordneten Verbindungsleiter. Da der Bereich der flächenförmigen Segmente optisch sehr unauffällig ist, muss er nicht notwendigerweise durch einen Maskierungsdruck verdeckt werden, was zu einer größeren Durchsichtsfläche durch die Scheibe führt.

In einer weiteren vorteilhaften Weiterbildung einer erfindungsgemäßen Antennenscheibe weist die Trennlinie, die die flächenförmigen Segment unterteilt, eine Breite d von 25 µm bis 300 µm und bevorzugt 30 µm bis 140 µm aufweist. Trennlinien mit dieser Breite bieten den Vorteil einer präzisen und einfachen elektrischen Isolierung und sind gleichzeitig für das menschliche Auge kaum sichtbar.

Die Erfindung umfasst weiterhin ein Verfahren zur Herstellung einer elektrisch beheizbaren Antennenscheibe, wobei zumindest
a) eine elektrische Heizschicht auf zumindest einem Teil einer Scheibenfläche einer transparenten Scheibe abgeschieden wird,
b) ein Abschnitt der Heizschicht durch einen Trennbereich elektrisch für Gleichströme isolierend unterteilt wird,
c) mindestens ein erster Sammelleiter und ein zweiter Sammelleiter auf die Heizschicht aufgebracht werden, wobei die Sammelleiter in direktem Kontakt elektrisch leitend mit der Heizschicht verbunden werden, so dass nach Anlegen einer Speisespannung aus einer Spannungsquelle an die Sammelleiter ein Heizstrom über ein von der Heizschicht gebildetes Heizfeld fließen kann,
d) ein erster Antennenanschluss auf die Heizschicht aufgebracht wird und in direktem Kontakt elektrisch leitend mit der Heizschicht verbunden wird,
e) ein zweiter Antennenanschluss innerhalb des Abschnitts auf die Heizschicht aufgebracht wird und in direktem Kontakt elektrisch leitend mit der Heizschicht verbunden wird, wodurch der zweite Antennenleiter kapazitiv für die Übertragung von Antennensignalen an die an den Abschnitt grenzende Heizschicht gekoppelt wird,
f) ein Verbindungsleiter auf die Scheibe aufgebracht wird, wodurch der erste Antennenanschluss und der zweite Antennenanschluss galvanisch miteinander verbunden werden.

In einer vorteilhaften Ausführungsform wird die Heizschicht im Trennbereich durch Laserabtragung entfernt. Dies ist besonders vorteilhaft, da sich mittels Laserabtragung eine präzise und sichere elektrisch Isolierung für Gleichströme erzielen lässt und gleichzeitig der Trennbereich sehr fein ausgestaltet werden kann, so dass er für das menschliche Auge kaum wahrnehmbar ist und die Durchsicht durch die Scheibe kaum beeinträchtigt. Außerdem ist der Trennbereich so schmal, dass der abgetrennte Abschnitt kapazitiv für die Übertragung von Antennensignalen an die an den Abschnitt grenzende Heizschicht gekoppelt wird.

In einer besonders vorteilhaften Ausführungsform des erfindungsgemäßen Verfahrens werden die Sammelleiter, der erste Antennenanschluss, der zweite Antennenanschluss und der Verbindungsleiter durch Siebdruck aus einer elektrisch leitfähigen Druckpaste auf derjenigen Scheibenoberfläche aufgebracht, auf der die Heizschicht angeordnet wurde. Diese Herstellungsart ist besonders kostengünstig und industriell einfach durchzuführen. Dabei ist es besonders Vorteilhaft, wenn die Verfahrensschritte c), d), e) und f) gleichzeitig in einem Siebdruck-Prozess durchgeführt werden. Dies ist besonders kostengünstig und schnell durchzuführen.

Die Erfindung erstreckt sich weiterhin auf die Verwendung einer wie oben beschriebenen Antennenscheibe als funktionales und/oder dekoratives Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

Es versteht sich, dass die verschiedenen Ausgestaltungen der erfindungsgemäßen Antennenscheibe einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nun anhand von Ausführungsbeispielen näher erläutert, wobei Bezug auf die beigefügten Figuren genommen wird. Es zeigen in vereinfachter, nicht maßstäblicher Darstellung:
- Figur 1A: eine Draufsicht auf eine schematische Darstellung eines Ausgestaltungsbeispiels einer erfindungsgemäßen Antennenscheibe;
- Figur 1B: eine Querschnittsdarstellung entlang der Schnittlinie A-A' des Ausgestaltungsbeispiels der erfindungsgemäßen Antennenscheibe aus Figur 1A;
- Figur 2: eine Draufsicht auf eine schematische Darstellung eines alternativen Ausgestaltungsbeispiels einer erfindungsgemäßen Antennenscheibe;
- Figur 3A: eine Draufsicht auf eine schematische Darstellung eines weiteren alternativen Ausgestaltungsbeispiels einer erfindungsgemäßen Antennenscheibe;
- Figur 3B: eine Querschnittsdarstellung entlang der Schnittlinie A-A' des Ausgestaltungsbeispiels der erfindungsgemäßen Antennenscheibe aus Figur 3A;
- Figur 3C: eine vergrößerte Darstellung des Ausschnitts Z des Ausgestaltungsbeispiels der erfindungsgemäßen Antennenscheibe aus Figur 3A; und
- Figur 4: ein Flussdiagramm eines Ausführungsbeispiels des erfindungsgemäßen Verfahrens.

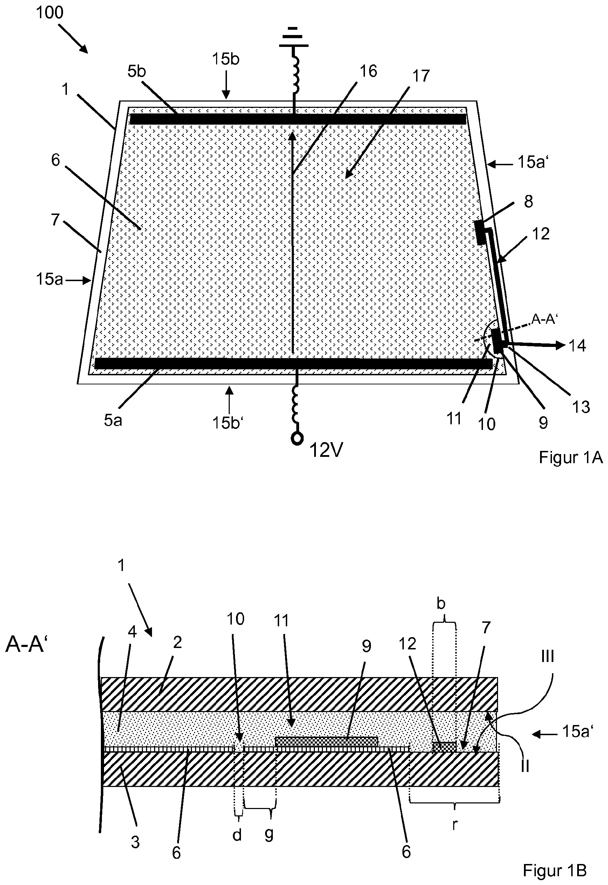

Figur 1A zeigt ein erstes Ausgestaltungsbeispiel einer erfindungsgemäßen elektrisch beheizbaren Antennenscheibe 100. Die Antennenscheibe 100 ist hier beispielsweise als transparente Scheibe 1 vom Typ Verbundscheibe ausgebildet. Die Verbundscheibe 1 ist für sichtbares Licht beispielsweise im Wellenlängenbereich von 350 nm bis 800 nm transparent, wobei unter dem Begriff "Transparenz" eine Lichtdurchlässigkeit von mehr als 50%, vorzugsweise mehr als 70% und insbesondere bevorzugt mehr als 75% zu verstehen ist. Die Verbundscheibe 1 dient beispielsweise als Windschutzscheibe eines Kraftfahrzeugs, wobei sie aber auch anderweitig verwendet werden kann.

Figur 1B zeigt den schematischen Aufbau der Verbundscheibe 1 anhand eines Querschnitts entlang der Schnittlinie A-A' aus Figur 1A.

Die Verbundscheibe 1 umfasst zwei transparente Einzelscheiben, nämlich eine starre Außenscheibe 2 und eine starre Innenscheibe 3, die über eine transparente thermoplastische Klebeschicht 4 fest miteinander verbunden sind. Die Einzelscheiben haben in etwa eine gleiche Größe und sind beispielsweise aus Glas, insbesondere Floatglas, Gussglas und Keramikglas gefertigt, wobei sie gleichermaßen aus einem nichtgläsernen Material, beispielsweise Kunststoff, insbesondere Polystyrol (PS), Polyamid (PA), Polyester (PE), Polyvinylchlorid (PVC), Polycarbonat (PC), Polymethylmethacrylat (PMA) oder Polyethylenterephtalat (PET) hergestellt sein können. Allgemein kann jedes Material mit hinreichender Transparenz, ausreichender chemischer Beständigkeit sowie geeigneter Form- und Größenstabilität verwendet werden. Für eine anderweitige Verwendung, beispielsweise als Dekorteil, wäre es auch möglich, die Außen- und Innenscheiben 2, 3 aus einem flexiblen Material herzustellen. Die jeweilige Dicke der Außen- und Innenscheiben 2, 3 kann je nach Verwendung breit variieren und kann für Glas beispielsweise im Bereich von 1 bis 24 mm liegen.

Die Verbundscheibe 1 hat eine zumindest annähernd trapezförmig geschwungene Kontur (in Figur 1A ist die Verbundscheibe vereinfacht trapezförmig dargestellt), die sich aus einem den beiden Einzelscheiben 2, 3 gemeinsamen Scheibenrand ergibt. Der Scheibenrand ist aus zwei gegenüberliegenden langen Scheibenrändern 15a,15a' und zwei gegenüberliegenden kurzen Scheibenrändern 15b,15b' zusammengesetzt. In üblicher Weise sind die Scheibenflächen mit den römischen Ziffern I-IV bezeichnet, wobei "Seite I" einer ersten Scheibenfläche der Außenscheibe 2, "Seite II" einer zweiten Scheibenfläche der Außenscheibe 2, "Seite III" einer dritten Scheibenfläche der Innenscheibe 3 und "Seite IV" einer vierten Scheibenfläche der Innenscheibe 3 entspricht. In der Verwendung als Windschutzscheibe ist Seite I der äußeren Umgebung und Seite IV der Fahrgastzelle des Kraftfahrzeugs zugewandt.

Die Klebeschicht 4 zur Verbindung von Außenscheibe 2 und Innenscheibe 3 besteht vorzugsweise aus einem klebenden Kunststoff, bevorzugt auf Basis von Polyvinylbutyral (PVB), Ethylen-Vinyl-Acetat (EVA) und Polyurethan (PU). Es versteht sich, dass die Klebeschicht 4 auch als Bilayer oder Multilayer in Form zweier oder mehrerer gleicher oder verschiedener Klebeschichten ausgebildet sein kann, beispielsweise zweier PVB-Folien.

In dem in Figur 1A dargestellten Ausgestaltungsbeispiel ist auf der Scheibenoberfläche III der Innenscheibe 3 eine Heizschicht 6 in Form einer transparenten, elektrisch leitfähigen Beschichtung aufgebracht, welche durch einen allseitig umlaufende heizschichtfreien Randbereich 7 begrenzt ist. Die Heizschicht 6 bedeckt eine Fläche, welche mehr als 50%, bevorzugt mehr als 70% und noch stärker bevorzugt mehr als 90% der Scheibenoberfläche III der Innenscheibe 3 beträgt. Die von der Heizschicht 6 bedeckte Fläche beträgt vorzugsweise mehr als 1m² und kann allgemein, ungeachtet der Anwendung der Verbundscheibe 1 als Windschutzscheibe, beispielsweise im Bereich von 100 cm² bis 25 m² liegen. Die Heizschicht 6 enthält mindestens ein elektrisch leitfähiges Material oder besteht hieraus. Beispiele hierfür sind Metalle mit einer hohen elektrischen Leitfähigkeit wie Silber, Kupfer, Gold, Aluminium oder Molybdän, Metall-Legierungen wie mit Palladium legiertes Silber, sowie transparente elektrisch leitfähige Oxide (TCO = Transparent Conductive Oxides). Bei TCO handelt es sich vorzugsweise um Indiumzinnoxid, fluordotiertes Zinndioxid, aluminiumdotierts Zinndioxid, galliumdotiertes Zinndioxid, bordotiertes Zinndioxid, Zinnzinkoxid oder antimondotiertes Zinnoxid.

Die Heizschicht 6 kann aus einer Einzelschicht mit einem solchen leitfähigen Material oder aus einer Schichtenfolge, welche zumindest eine solche Einzelschicht enthält, bestehen. Beispielsweise kann die Schichtenfolge mindestens eine Schicht aus einem leitfähigen Material und mindestens eine Schicht aus einem dielektrischen Material umfassen. Die Dicke der Heizschicht 6 kann je nach Verwendung breit variieren, wobei die Dicke an jeder Stelle beispielsweise im Bereich von 30 nm bis 100 µm liegen kann. Im Falle von TCO liegt die Dicke vorzugsweise im Bereich von 100 nm bis 1,5 µm, bevorzugt im Bereich von 150 nm bis 1 µm, insbesondere bevorzugt im Bereich von 200 nm bis 500 nm. Besteht die Heizschicht aus einer Schichtenfolge mit mindestens einer Schicht aus einem elektrisch leitfähigen Material und mindestens einer Schicht aus einem dielektrischen Material beträgt die Dicke vorzugsweise 20 nm bis 100 µm, bevorzugt 25 nm bis 90 µm, und insbesondere bevorzugt 30 nm bis 80 µm. Vorteilhaft ist die Schichtenfolge thermisch hoch belastbar, so dass sie die zum Biegen von Glasscheiben erforderlichen Temperaturen von typischer Weise mehr als 600°C ohne Schädigung übersteht, wobei aber auch thermisch gering belastbare Schichtenfolgen vorgesehen sein können. Der Flächenwiderstand der Heizschicht 6 ist vorzugsweise geringer als 20 Ohm spezifischer Flächenwiderstand und liegt beispielsweise im Bereich von 0,5 bis 20 Ohm spezifischer Flächenwiderstand. Im gezeigten Ausführungsbeispiel beträgt der Flächenwiderstand der Heizschicht 6 beispielsweise 0,7 Ohm.

Die Heizschicht 6 wird vorzugsweise aus der Gasphase abgeschieden, zu welchem Zweck an sich bekannte Verfahren wie chemische Gasphasenabscheidung (CVD = Chemical Vapor Deposition) oder physikalische Gasphasenabscheidung (PVD = Physical Vapor Deposition) eingesetzt werden können. Vorzugsweise wird die Heizschicht 6 durch Sputtern (wie Magnetron-Kathodenzerstäubung) aufgebracht.

Der heizschichtfreie Randbereich 7 dient insbesondere einer elektrischen Isolierung der Heizschicht 6 nach außen, beispielsweise zur Verringerung einer kapazitiven Kopplung mit der elektrisch leitfähigen, in der Regel aus Blech gefertigten Fahrzeugkarosserie. Zudem wird die Heizschicht 6 gegen vom Scheibenrand 15a,15a',15b,16b' vordringende Feuchtigkeit und damit vor Korrosion geschützt. Die Breite r des umlaufenden Randbereichs 7 kann breit variieren. Vorzugsweise beträgt die Breite r des Randbereichs 7 von 0,2 cm bis 5 cm, bevorzugt von 0,3 cm bis 2 cm und insbesondere bevorzugt von 0,4 cm bis 1,3 cm. Der Randbereich 7 kann durch nachträgliches Entfernen der Heizschicht 6, beispielsweise durch mechanischen abrasiven Abtrag (wie Schleifen), Laserablation oder Ätzen, oder durch Maskieren der Innenscheibe 3 vor dem Aufbringen der Heizschicht 6 auf die Scheibenoberfläche III hergestellt werden.

Entlang des unteren Scheibenrandes 15b' ist ein erster Sammelleiter 5a auf der Heizschicht 6 angeordnet und mit dieser elektrisch leitend verbunden. Entlang des oberen Scheibenrandes 15b ist ein zweiter Sammelleiter 5b auf der Heizschicht 6 angeordnet und ebenfalls mit dieser elektrisch leitend verbunden. Die Sammelleiter 5a,5b sind an sich bekannt und bestehen beispielsweise aus einem Metallstreifen oder einem aufgedruckten elektrisch leitfähigen Silberdruck. Die beiden Sammelleiter 5a,5b sind hier beispielsweise mittig, jeweils mit einem Anschluss verbunden, mit dem die Sammelleiter 5a,5b über Zuleitungen mit einer Spannungsquelle verbunden werden können. Die Spannungsquelle ist beispielsweise ein Bordspannungsnetz eines Fahrzeugs oder über Spannungswandler mit einem Bordspannungsnetz eines Fahrzeugs verbunden. In diesem Beispiel ist der erste Sammelleiter 5a mit dem positiven Pol einer 12V-Spannungsquelle verbunden und der zweite Sammelleiter 5b mit einem dazugehörigen Masse- oder Bezugspotential. Dabei sind zwischen erstem Sammelleiter 5a und positivem Pol sowie zwischen zweitem Sammelleiter 5b und Massepotential Filter angeordnet um Störungen aus dem Bordnetz auf die Antenne einerseits und eine hochfrequenzmäßige ungewollte Erdung der Antenne über die Heizschicht zu vermeiden.

Das Anlegen einer Spannung an die Sammelleiter 5a,5b führt zur Ausbildung eines Heizstromes 16 der über ein von der Heizschicht 6 zwischen den Sammelleitern 5a,5b befindliches Heizfeld 17 fließt und dieses durch ohmsche Widerstandsheizung erwärmt. Der dabei entstehende Strompfad des Heizstroms 16 ist beispielsweise durch einen Pfeil angedeutet. Er verläuft im Wesentlichen entlang der kürzesten Verbindung zwischen den Sammelleitern 5a,5b. Bei komplizierteren Scheibengeometrien, bei mehr als zwei Sammelleitern und bei Berücksichtigung des eigenen ohmschen Widerstands der Sammelleiter 5a,5b kann der Strompfand gebogen verlaufen. Die exakten, realen Strompfade lassen sich für den Fachmann einfach ermitteln, beispielsweise durch Simulationen.

In der erfindungsgemäßen Verbundscheibe 1 dient die Heizschicht 6 als Flächenantenne zum Empfangen von elektromagnetischen Wellen, vorzugsweise im Frequenzbereich der terrestrischen Rundfunkbänder I und II. Zu diesem Zweck ist Heizschicht 6 mit einem ersten Antennenanschluss 8 elektrisch gekoppelt. Im Ausführungsbeispiel ist der erste Antennenanschluss 8 durch direkten Kontakt mit der Heizschicht 6 galvanisch gekoppelt. Der bandförmige erste Antennenanschluss 8 enthält beispielsweise ein metallisches Material, vorzugsweise Silber, und ist beispielsweise mittels Siebdruck aufgedruckt. Er hat vorzugsweise eine Länge von mehr als 5 mm bei einer Breite von 5 mm oder größer, bevorzugt eine Länge von mehr als 25 mm bei einer Breite von 5 mm oder größer. Im Ausführungsbeispiel hat der erste Antennenanschluss 8 eine Länge von 25 mm und eine Breite von 8 mm. Die Dicke des ersten Antennenanschlusses 8 beträgt vorzugsweise weniger als 0,015 mm. Die spezifische Leitfähigkeit eines Silber-haltigen gedruckten ersten Antennenanschlusses 8 beträgt beispielsweise 61,35•10⁶ /Ohm•m.

Im gezeigten Ausgestaltungsbeispiel ist der erste Antennenanschluss 8 auf und damit in direktem elektrischem Kontakt mit der Heizschicht 6 in etwa parallel zum heizschichtfreien Randbereich 7 und in etwa mittig zum rechten Scheibenrand 15a' angeordnet. Dabei ist der erste Antennenanschluss 8 so ausgebildet, dass die Antennensignale der Flächenantenne, die durch die Heizschicht 6 in der Umgebung des ersten Antennenanschlusses 8 empfangen werden, am ersten Antennenanschluss 8 abgegriffen werden können.

Um die Antennenfunktion der Flächenantenne zu verbessern ist die Heizschicht 6 mit einem zweiten Antennenanschluss 9 elektrisch gekoppelt. Im Ausführungsbeispiel ist der zweite Antennenanschluss 9 durch direkten Kontakt mit der Heizschicht 6 galvanisch gekoppelt. Der beispielsweise streifenförmige zweite Antennenanschluss 9 besteht beispielsweise ebenfalls aus einem metallischen Material, vorzugsweise Silber, und ist beispielsweise mittels Siebdruck aufgedruckt. Er hat vorzugsweise eine Länge von mehr als 10 mm bei einer Breite von 5 mm oder größer, bevorzugt eine Länge von mehr als 25 mm bei einer Breite von 5 mm oder größer. Im Ausführungsbeispiel hat der zweite Antennenanschluss 9 die gleichen Abmessungen wie der erste Antennenanschluss 8 und damit eine Länge von 25 mm und eine Breite von 8 mm. Die Dicke des zweiten Antennenanschlusses 9 beträgt vorzugsweise weniger als 0,015 mm. Die spezifische Leitfähigkeit eines Silber-haltigen gedruckten zweiten Antennenanschlusses 9 beträgt beispielsweise 61,35•10⁶ /Ohm•m.

Wie in Figur 1B gezeigt ist, verläuft der zweite Antennenanschluss 9 auf und damit in direktem elektrischem Kontakt mit der Heizschicht 6 in etwa parallel zum heizschichtfreien Randbereich 7 und in etwa am unteren rechten Scheibenrand 15a', in der Nähe des ersten Sammelleiters 5a. Dabei ist der zweite Antennenanschluss 9 so angeordnet, dass die Antennensignale der Flächenantenne, die durch die Heizschicht 6 in der Umgebung des zweiten Antennenanschlusses 9 empfangen werden, am zweiten Antennenanschluss 9 abgegriffen werden können. Dabei befindet sich der direkte elektrische Kontakt des zweiten Antennenleiters 9 mit der Heizschicht 6 in einem Abschnitt 11 der Heizschicht 6, der durch einen heizschichtfreien Trennbereich 10 von der übrigen Heizschicht 6 elektrisch isoliert ist. Der Trennbereich 10 ist hier beispielsweise linienförmig und mit konstanter Breite ausgebildet. Er weist lediglich eine Breite d von beispielsweise 100 µm auf und wird bevorzugt durch Laserabtragung erzeugt. Der Trennbereich 10 verläuft in etwa halbkreisförmig um den zweiten Antennenanschluss 9 und wird durch den heizschichtfreien Randbereich 7 begrenzt. Durch die schmale Breite d des Trennbereichs 10 von nur 100 µm ist der elektrisch isolierte Abschnitt 11 der Heizschicht 6 hochfrequenztechnisch an die angrenzende Heizschicht 6 kapazitiv gekoppelt, so dass die Antennensignale der Flächenantenne, die durch die Heizschicht 6 in der Umgebung des zweitens Antennenanschlusses 9 innerhalb und außerhalb des Abschnitts 11 empfangen werden, am zweiten Antennenanschluss 9 abgegriffen werden können. Durch die halbkreisförmige Ausgestaltung des Trennbereichs 10 wird der Heizstrom 16 im Heizfeld 17 nur wenig beeinflusst und die Homogenität der Heizleistungs- und Temperaturverteilung beim Heizen nur wenig beeinträchtigt.

Der erfindungsgemäße Trennbereich 10, der den Abschnitt 11 von der übrigen Heizschicht 6 elektrisch isoliert, sorgt dafür, dass kein Potentialunterschied zwischen dem ersten Antennenanschluss 8 und dem zweiten Antennenanschluss 9 auftritt. Dies wäre der Fall, wenn kein Trennbereich 10 vorhanden wäre, da die Antennenanschlüsse 8,9 in unterschiedlichen Abständen zu den Sammelleitern 5a,5b im Heizfeld 17 liegen. Durch die Potentialtrennung des Trennbereichs 10 können die Antennensignale, die zum ersten Antennenanschluss 8 und die Antennensignale, die zum zweiten Antennenanschluss 9 geleitet werden, über einen gemeinsamen Antennenfußpunkt 13 und eine gemeinsame Antennenleitung zum Antennenverstärker 14 geführt werden.

Die Verbindung der beiden Antennensignale erfolgt hier durch einen Verbindungsleiter 12, der hier ebenfalls auf der Scheibenfläche III der Innenscheibe 3 angeordnet ist. Im dargestellten Beispiel ist der Verbindungsleiter 12 im heizfeldfreien Randbereich 7 angeordnet und muss deshalb nicht elektrisch isoliert werden.

Der Verbindungsleiter 12 ist hier als ein linienförmiger, ungeschirmter Antennenleiter ausgebildet, der als Linienantenne zum Empfangen von elektromagnetischen Wellen, vorzugsweise im Frequenzbereich der terrestrischen Rundfunkbänder II bis V, besonders bevorzugt im Frequenzbereich der Rundfunkbänder III bis V dient und zu diesem Zweck geeignet ist. Im vorliegenden Ausführungsbeispiel ist der Verbindungsleiter 12 ebenfalls als Siebdruck aus einer silberhaltigen Siebdruckpaste auf die Scheibenoberfläche III aufgedruckt und hat beispielsweise eine Breite b von 300 µm, eine Höhe von 10 µm und eine Länge von 550 mm. Die Linienleitfähigkeit des Verbindungsleiters 12 ist vorzugsweise geringer als 20 Ohm/m, besonders bevorzugt geringer als 10 Ohm/m. Im gezeigten Ausführungsbeispiel beträgt die Länge des Verbindungsleiters 12 ca. 300 mm bei einer Breite von 0,75 mm. Seine Linienleitfähigkeit beträgt beispielsweise 5 Ohm/m.

Alternativ kann der Verbindungsleiter 12 auch in Form eines Drahts ausgeführt sein, der vorzugsweise länger als 100 mm und dünner als400 µm im Durchmesser ist. Die Linienleitfähigkeit des Verbindungsleiters 12 ist dann vorzugsweise geringer als 20 Ohm/m, besonders bevorzugt geringer als 10 Ohm/m.

Im in Figur 1A dargestellten Ausgestaltungsbeispiel hat der Verbindungsleiter 12 einen zumindest annähernd geradlinigen Verlauf und befindet sich vollständig innerhalb des heizschichtfreien Randrandbereichs 7 der Verbundscheibe 1, wobei er sich überwiegend entlang des kurzen Scheibenrands 15a' beispielsweise unterhalb einer Fahrzeugverkleidung (nicht gezeigt) im Bereich eines Maskierungsstreifens (nicht gezeigt) erstreckt. Dabei hat der Verbindungsleiter 12 einen hinreichenden Abstand sowohl vom Scheibenrand 15a' als auch vom äußeren Rand der Heizschicht 6, wodurch einer kapazitiven Verkopplung mit der Heizschicht 6 und der Fahrzeugkarosserie entgegen gewirkt wird.

Da sich der Verbindungsleiter 12 außerhalb eines Raums befindet, der dadurch definiert ist, dass sich jeder darin enthaltene Punkt durch orthogonale Parallelprojektion auf die eine Projektionsfläche darstellende, als Flächenantenne dienende Heizschicht 6 (bzw. auf den als Flächenantenne wirksamen Teil der Heizschicht 6) abbilden lässt, wird die Linienantenne durch die Flächenantenne elektrisch nicht belastet.

Der erste Antennenanschluss 8 ist mit dem Verbindungsleiter 12 an dessen einen Ende galvanisch elektrisch gekoppelt. Des Weiteren ist das andere Ende des linienförmigen Verbindungsleiters 12 mit dem zweiten Antennenanschluss 9 galvanisch elektrisch gekoppelt. Die galvanische Verbindung erfolgt beispielsweise durch gemeinsames Aufdrucken der Antennenanschlüsse 8,9 und des Verbindungsleiters 12 in einer ununterbrochenen Struktur. Durch die galvanische Verbindung werden Übertragungsverluste gemindert.

Die Verbindungsstelle zwischen zweitem Antennenanschluss 9 und Verbindungsleiter 12 kann als Antennenfußpunkt 13 zum Abgreifen von Antennensignalen der Flächenantenne angesehen werden. Ist der Verbindungsleiter 12, wie in diesem Beispiel als Linienantenne ausgebildet, so dient der Antennenfußpunkt 13 als gemeinsamer Anschlusspunkt für die Antennensignale der Flächenantenne um den ersten Antennenanschluss 8, für die Antennensignale der Linienantenne, die durch den Verbindungsleiter 12 gebildet ist sowie für die Antennensignale der Flächenantenne um den zweiten Antennenanschluss 9. Die Antennensignale der Flächen- und der Linienantennen werden somit am zweiten Antennenanschluss 9 beziehungsweise am dortigen Antennenfußpunkt 13 zur Verfügung gestellt.

Der Antennenfußpunkt 13 ist mit einem parasitär als Antenne wirkenden Anschlussleiter elektrisch gekoppelt. Im vorliegenden Ausführungsbeispiel ist der Anschlussleiter mit dem Antennenfußpunkt 13 galvanisch gekoppelt. Über den Anschlussleiter und einen damit verbundenen Konnektor sind die Antennensignale der Antennenscheibe 100 mit nachgeschalteten elektronischen Komponenten, beispielsweise einem Antennenverstärker 14, elektrisch verbunden, wobei die Antennensignale durch den Anschlussleiter aus der Verbundscheibe 1 herausgeführt werden.

Dabei ist die räumliche Lage des Antennenfußpunktes 13 so gewählt, dass der Anschlussleiter möglichst kurz ist und dessen parasitäre Wirkung als Antenne minimiert wird, so dass beispielsweise auf die Verwendung eines hochfrequenztechnisch spezifisch ausgebildeten Leiters verzichtet werden kann. Der Anschlussleiter ist vorzugsweise kürzer als 100 mm. Entsprechend ist der Anschlussleiter hier beispielsweise als ungeschirmter Litzendraht oder Folienleiter ausgebildet, der kostengünstig und platzsparend ist und zudem über eine relative einfache Verbindungstechnik angeschlossen werden kann. Die Breite des hier beispielsweise als Flachleiter ausgebildeten Anschlussleiters verjüngt sich vorzugsweise zum Scheibenrand 15a' hin, um einer kapazitiven Verkopplung mit der Fahrzeugkarosserie entgegen zu wirken.

Die erfindungsgemäße Antennenscheibe 100 führt in einem Anschlusspunkt die Antennensignale mehrerer Flächenantennenbereiche und gegebenenfalls einer oder mehrerer Linienantennen zusammen, ohne dass die Heizfunktion der Scheibe nennenswert beeinträchtigt wird. Dies war für den Fachmann unerwartet und überraschend.

Es versteht sich, dass die erfindungsgemäße Verbundscheibe 1 weitere Merkmale einer technisch üblichen Scheibe aufweisen kann, beispielsweise einen den Randbereich verdeckenden opaken Schwarz- oder Maskierungsdruck oder weitere heizschichtfreie Bereich in der Heizschicht 6, die beispielsweise als Kommunikationsfenster dienen können.

Es versteht sich ebenfalls, dass im Rahmen der vorliegenden Erfindung die Heizschicht 6, die Sammelleiter 5a,5b, die Antennenanschlüsse 8,9 und/oder Verbindungsleiter 12, einzeln oder allesamt, auf einem flächenhaften Träger angeordnet sein können, der direkt oder über eine oder mehrere Klebeschichten 4 mit einer Einzelscheiben 3 verbunden ist oder zwischen zwei Einzelscheiben 2,3 eingebettet ist. Ein derartiger flächenhafter Träger ist vorzugsweise aus Kunststoff, bevorzugt auf Basis von Polyamid (PA), Polyurethan (PU), Polyvinylchlorid (PVC), Polycarbonat (PC), Polyester (PE) und Polyvinylbutyral (PVB), besonders bevorzugt auf Basis von Polyester (PE) und Polyethylenterephthalat (PET), hergestellt.

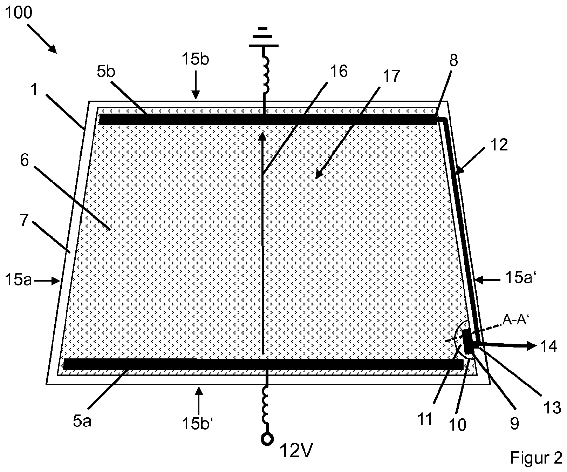

Figur 2 zeigt eine schematische Draufsicht auf ein alternatives Ausgestaltungsbeispiel einer erfindungsgemäßen Antennenscheibe 100. Um unnötige Wiederholungen zu vermeiden, werden lediglich die Unterschiede zum Ausführungsbeispiel von Figur 1A und Figur 1B erläutert und ansonsten auf die dort gemachten Ausführungen Bezug genommen. Demnach ist die Antennenscheibe 100 als Verbundscheibe 1 ausgestaltet und weist wie oben beschrieben eine Heizschicht 6 und Sammelleiter 5a,5b auf. Des Weiteren weist die Verbundscheibe 1 einen zweiten Antennenanschluss 9, der wie bereits beschrieben mit einem durch einen Trennbereich 10 elektrisch unterteilten Abschnitt 11 des Heizfeldes 6 elektrisch kontaktiert ist.

Das Ausgestaltungsbeispiel in Figur 2 unterscheidet sich von der Verbundscheibe 1 aus Figur 1A dadurch, dass der erste Antennenanschluss 8 nicht in der Mitte des Scheibenrandes 15a' angeordnet ist, sondern im oberen Bereich des Scheibenrandes 15a' an der Grenze zum oberen Scheibenrand 15b. Der erste Antennenanschluss 8 ist mit dem Ende des zweiten Sammelleiters 5b identisch und somit mit diesem in galvanischen Kontakt.

Der erste Antennenleiter 8 ist wiederum durch einen Verbindungsleiter 12 mit dem zweiten Antennenleiter 9 galvanisch verbunden. Der Verbindungsleiter 12 ist als linienförmiger Antennenleiter ausgebildet. Im gezeigten Ausgestaltungsbeispiel beträgt die Länge des als Antennenleiter dienenden Verbindungsleiters 12 etwa 650 mm bei einer Breite von 0,75 mm.

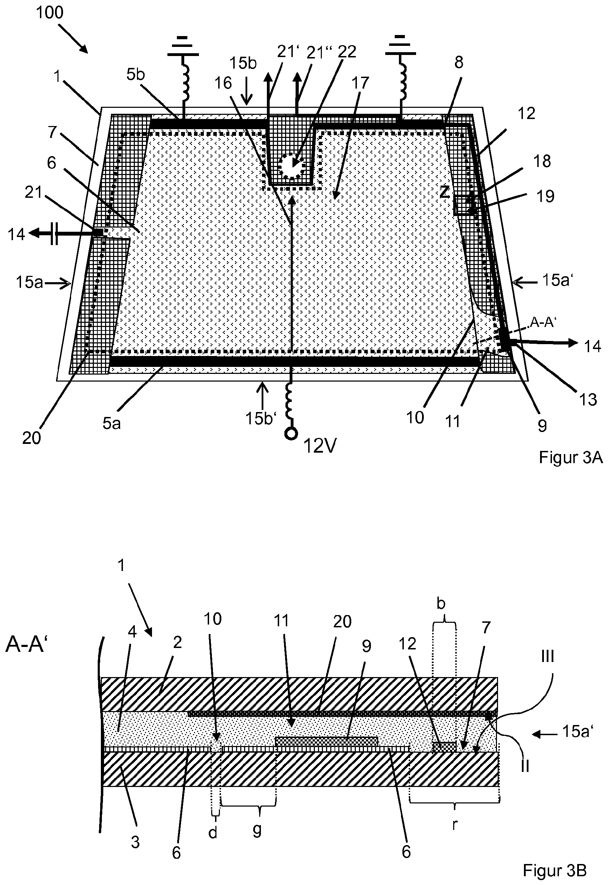

Figur 3A zeigt eine schematische Draufsicht auf ein alternatives Ausgestaltungsbeispiel einer erfindungsgemäßen Antennenscheibe 100.

Figur 3B zeigt eine schematische Querschnittsdarstellung entlang der Schnittlinie A-A' des Ausgestaltungsbeispiels der erfindungsgemäßen Antennenscheibe 100 aus Figur 3A.

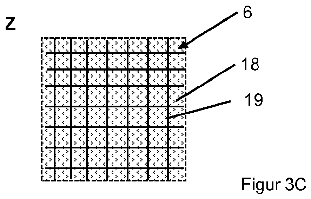

Figur 3C zeigt eine vergrößerte Darstellung des Ausschnitts Z des Ausgestaltungsbeispiels der erfindungsgemäßen Antennenscheibe 100 aus Figur 3A.

Um unnötige Wiederholungen zu vermeiden, werden lediglich die Unterschiede zum Ausführungsbeispiel von Figur 1A und Figur 1B erläutert und ansonsten auf die dort gemachten Ausführungen Bezug genommen. Demnach ist die Antennenscheibe 100 als Verbundscheibe 1 ausgestaltet und weist wie oben beschrieben eine Heizschicht 6 und Sammelleiter 5a,5b auf. Des Weiteren weist die Verbundscheibe 1 einen zweiten Antennenanschluss 9, der wie bereits beschrieben mit einem durch einen Trennbereich 10 elektrisch unterteilten Abschnitt 11 des Heizfeldes 6 elektrisch kontaktiert ist.

Weiterhin ist die Außenscheibe 2 mit einer opaken Farbschicht versehen, die auf der zweiten Scheibenfläche II aufgebracht ist und einen rahmenförmig umlaufenden Maskierungsstreifen 20 bildet. Die Farbschicht besteht vorzugsweise aus einem elektrisch nicht-leitenden, schwarz eingefärbten Material, das in die Außenscheibe 2 eingebrannt werden kann. Der Maskierungsstreifen 20 verhindert einerseits die Sicht auf einen Klebestrang (nicht gezeigt), mit dem die Verbundscheibe 1 in eine Fahrzeugkarosserie eingeklebt werden kann, andererseits dient er als UV-Schutz für das verwendete Klebematerial. Es versteht sich, dass die opake Farbschicht auch auf anderen Seiten des Gesamtaufbaus ausgeführt werden kann.

Im dargestellten Ausgestaltungsbeispiel weist die Heizschicht 6 im oberen mittigen Bereich der Scheibe 1 einen beispielsweise kreisförmigen heizschichtfreien Bereich auf, der beispielsweise als Kommunikationsfenster 22 oder Sensorfenster dient, beispielsweise für einen Regensensor. Durch das Kommunikationsfenster 22 kann elektromagnetische Strahlung und insbesondere Infrarotstrahlung nahezu ungehindert die Verbundscheibe 1 passieren und auf einen hinter der Verbundscheibe 1 angeordneten Sensor treffen oder von diesem ausgesandt werden. Der Sammelleiter 5b ist hier rechteckförmig um das Kommunikationsfenster 22 herumgeführt. Der Sammelleiter 5b ist in der Umführung dünner ausgeführt als am oberen Scheibenrand 15b, um optisch weniger auffällig zu sein. Um dennoch eine durchgängig niederohmige Verbindung zum Massepotential sicherzustellen, ist der zweite Sammelleiter 5b in diesem Beispiel über zwei Anschlüsse mit dem Massepotential verbunden. Es versteht sich, dass auch der erste Sammelleiter 5a oder nur der erste Sammelleiter 5a zwei oder mehrere Anschlüsse zur Spannungsversorgung aufweisen können.

Wie in Figur 3A und 3C gezeigt ist, ist die Heizschicht 6 in mehreren Bereichen und insbesondere angrenzend an die heizschichtfreien Randbereiche 7 entlang der Scheibenränder 15a,15a' in eine Vielzahl elektrisch isolierter Segmente 18 unterteilt, zwischen denen sich jeweils elektrisch isolierende (entschichtete) Trennlinien 19 befinden.

Wie in der eingangs bereits genannten WO 2010/081589 A1 offenbart ist, kann durch diese Maßnahme in vorteilhafter Weise einer kapazitiven Verkopplung der Heizschicht 6 mit umgebenden leitfähigen Strukturen, beispielsweise einer elektrisch leitfähigen Fahrzeugkarosserie, entgegengewirkt werden.

Die Trennlinien 19 weisen beispielsweise nur eine geringe Breite von etwa 100 µm auf und werden beispielsweise mittels Laserabtragung hergestellt. Die Unterteilung der Heizschicht 6 in eine Vielzahl von elektrisch voneinander isolierten Segmenten 18 ist daher optisch für das Auge kaum erkennbar und beeinträchtigt die Durchsicht durch die Verbundscheibe 1 nur wenig. Gleichzeitig verhindert diese Segmentierung eine kapazitive Kopplung der Heizschicht 6 mit umgebenden leitfähigen Strukturen, beispielsweise der elektrisch leitfähigen Fahrzeugkarosserie. Es ist daher besonders vorteilhaft in diesem Bereich eine Linienantenne anzuordnen, da diese von der Fahrzeugkarosserie größer beabstandet werden kann und folglich auch die Linienantenne eine viel geringere kapazitive Kopplung mit der Fahrzeugkarosserie aufweist.

In diesem Ausgestaltungsbeispiel hat der als linienförmigen Antennenleiter ausgebildete Verbindungsleiter 12 einen zumindest annähernd geradlinigen Verlauf und befindet sich nahezu vollständig auf einem Bereich der Heizschicht 6, der in eine Vielzahl voneinander elektrisch isolierten Segmenten 18 unterteilt ist. Durch die Unterteilung in Segmenten 18 beeinträchtigt die Heizschicht 6 in diesem Bereich nicht die Funktion der Linienantenne. Insbesondere wird durch die Segmentierung in vorteilhafter Weise erreicht, dass der hochfrequenztechnisch wirksame Abstand zwischen der Heizschicht 6 und der Linienantenne einerseits und der Fahrzeugkarosserie andererseits vergrößert wird.

Im dargestellten Ausführungsbeispiel sind zwei Bereiche mit den elektrisch isolierten Segmenten 18 jeweils streifenförmig parallel zu den kürzeren Scheibenrändern 15a,15a' angeordnet und damit in etwa parallel zum Heizstrom 16 in Heizfeld 17, welches an den Bereich mit Segmenten angrenzt. Durch diese Anordnung wird der Verlauf der Strompfade im Heizfeld 17 nicht gestört und die Heizleistungsverteilung und Temperaturverteilung beim Heizen ist sehr homogen. Um einen ungestörten Verlauf des Heizstroms 16 im Heizfeld 17 zu gewährleisten ist der Abschnitt 11 in einer Aussparung des segmentierten Bereichs angeordnet. Der Trennbereich 10 setzt dabei die in etwa parallel zum Scheibenrand 15a' verlaufenden Begrenzung des segmentierten Bereichs fort. Durch diese Maßnahme wird der Verlauf des Heizstroms 16 im Heizfeld 17 nicht gestört.

In einer weiteren Aussparung des segmentierten Bereichs am gegenüberliegenden kürzeren Scheibenrand 15a ist ein weiterer Antennenanschluss 21 angeordnet. Dieser weitere Antennenanschluss 21 ist aber beispielsweise nicht durch einen Trennbereich 10 von der Heizschicht 6 isoliert. Das am weiteren Antennenanschluss 21 abgegriffene Antennensignal der in der Umgebung als Flächenantenne dienenden Heizschicht 6 befindet sich bei Anliegen einer Speisespannung an den Sammelleitern 5a,5b auf dem dortigen Potential des Heizfelds 17. Bei etwa mittiger Anordnung des weiteren Antennenanschlusses 21 sind dies beispielsweise etwa 6 V. Dies bedeutet, dass das Antennensignal des weiteren Antennenanschlusses 21 nur über eine kapazitive Kopplung mit dem Antennenverstärker 14 verbunden werden darf und nicht über eine galvanische Kopplung. Eine galvanische Kopplung würde in diesem Beispiel zu einem Kurzschluss zwischen dem weiteren Antennenanschluss 21 und dem ersten Antennenanschluss 8 führen, der seinerseits mit dem Sammelleiter 5b verbunden ist. Da am Samein Massepotential anliegt, würde der Kurzschluss dazu führen, dass am weiteren Antennenanschluss 21 ebenfalls ein Massepotential an die Heizschicht 6 anliegt und das Heizfeld 17 würde sehr inhomogen werden.

Es versteht sich, dass die erfindungsgemäße Scheibe 1 auch noch weitere Antennenanschlüsse 21', 21" aufweisen kann, die beispielsweise im Bereich um das Kommunikationsfenster 22 angeordnet sind. Je nach Position und damit je nach Potential können diese direkt (also über eine galvanische Kopplung) oder über einen Koppelkondensator (also über kapazitive Kopplung) mit dem Antennenverstärker 14 verbunden werden.

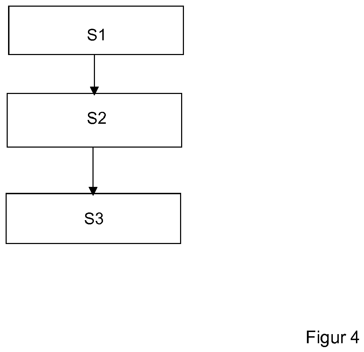

Figur 4 zeigt ein Flussdiagramm eines Ausführungsbeispiels des erfindungsgemäßen Verfahrens mit den Schritten S1, S2 und S3.
S1: Abscheiden einer elektrischen Heizschicht 6 auf zumindest einem Teil einer Scheibenfläche III einer transparenten Scheibe 1;
S2: Elektrisch isolierendes Unterteilen eines Abschnitts 11 der Heizschicht 6 durch einen Trennbereich 10 mittels Laserabtragung;
S3: Siebdruck auf die Scheibenfläche III der Scheibe 1 von
   - einem ersten Sammelleiter 5a und einem zweiten Sammelleiter 5b auf die Heizschicht 6, wobei die Sammelleiter 5a,5b in direktem Kontakt elektrisch leitend mit der Heizschicht 6 verbunden werden,
   - einem ersten Antennenanschluss 8 auf die Heizschicht 6, wobei der erste Antennenanschluss 8 in direktem Kontakt elektrisch leitend mit der Heizschicht 6 verbunden wird,
   - einem zweiten Antennenanschluss 9 innerhalb des Abschnitts 11 auf die Heizschicht 6, wobei der zweite Antennenanschluss 9 in direktem Kontakt elektrisch leitend mit der Heizschicht 6 verbunden wird, und
   - einem Verbindungsleiter 12, wobei der erste Antennenanschluss 8 und der zweite Antennenanschluss 9 galvanisch miteinander verbunden werden,
   wobei Sammelleiter 5a,5b, Antennenanschlüsse 8,9 und Verbindungsleiter 12 aus einer elektrisch leitfähigen Siebdruckpaste bestehen.

Im Folgenden werden einige weiteren beispielhaften Aspekte des erfindungsgemäßen Herstellungsverfahrens einer Antennenscheibe 100 als Verbundscheibe 1 beschrieben:
Zunächst werden Außenscheibe 2 und Innenscheibe 3 in der gewünschten trapezförmigen Kontur aus einem Glasrohling geschnitten. Anschließend wird die Innenscheibe 3 mit der Heizschicht 6 durch Sputtern beschichtet, wobei der Randstreifen 7 durch Einsatz einer Maske nicht beschichtet wird. Alternativ wäre es auch möglich, dass zunächst ein Rohling beschichtet wird, aus dem dann die Innenscheibe 3 geschnitten wird. Die auf diese Weise vorbehandelte Innenscheibe 3 wird zur Formung des Randstreifens 7 entschichtet, was in der industriellen Serienfertigung beispielsweise mittels eines mechanisch abtragenden Schleifrads oder durch Laserabtragung erfolgen kann.

Anschließend oder zeitgleich wird ein Abschnitt 10 durch eine Trennlinie 11 von der Heizschicht 6 für Gleichströme elektrisch isolierend unterteilt. Zusätzlich können Trennbereiche 19 entschichtet werden, die eine Vielzahl von elektrisch isolierten Segmenten 18 ausbilden. Die Trennlinie 11 und die Trennbereiche 19 werden bevorzugt durch Laserabtragung entschichtet. Dies hat den besonderen Vorteil, dass eine sichere elektrische Isolation erzielt werden kann und gleichzeitig die Trennlinie 11 und die Trennbereiche 19 sehr fein und optisch nur wenig auffällig sind.

Anschließend werden die beiden Sammelleiter 5a,5b, der erste Antennenanschluss 8, der zweite Antennenanschluss 9 und der Verbindungsleiter 12 beispielsweise im Siebdruckverfahren auf die Innenscheibe 3 aufgedruckt. Als Druckpaste kann beispielsweise eine Silberdruckpaste verwendet werden. Anschließend wird die Druckpaste voreingebrannt, gefolgt von einem Biegen der Scheiben 2, 3 bei hoher Temperatur. Eine elektrische Verbindung der Sammelleiter 5a,5b mit den ersten und Anschlussleitern kann beispielsweise durch Löten oder Fixieren mittels eines leitfähigen Klebstoffs oder beispielsweise im Ultraschalllötverfahren erfolgen. Gleiches gilt für die Anschlussleiter, die zur Weiterleitung der Antennensignale vom Antennenfußpunkt 13 an den Antennenverstärker 14 dienen. Anschließend erfolgt das Zusammenlegen von Außen- und Innenscheibe 2, 3 und Verkleben mittels der Klebeschicht 4.

Die Erfindung stellt eine Antennenscheibe 100 zur Verfügung, bei der das Antennensignal durch mehrere Antennenanschlüsse 8,9 verbessert ist, ohne dass die Antennenanschlüsse 8,9 die Heizfunktion der Antennenscheibe 100 beeinträchtigen. In einer vorteilhaften Ausgestaltung der Erfindung wird durch eine entsprechende Ausgestaltung des Verbindungsleiters 12 zwischen den Antennenanschlüssen 8,9 als Linienantenne ein bandbreitenoptimierten Empfang von elektromagnetischen Wellen ermöglicht, wobei durch die Kombination aus Flächen- und Linienantenne über den kompletten Frequenzbereich der Bänder I-V eine zufrieden stellende Empfangsleistung erreichbar ist.

Dies war für den Fachmann unerwartet und überraschend.

### Bezugszeichenliste

- 1: Scheibe, Verbundscheibe
- 2: Außenscheibe
- 3: Innenscheibe
- 4: Klebeschicht
- 5a: erster Sammelleiter
- 5b: zweiter Sammelleiter
- 6: Heizschicht
- 7: Randbereich
- 8: erster Antennenanschluss
- 9: zweiter Antennenanschluss
- 10: Trennbereich
- 11: Abschnitt
- 12: Verbindungsleiter
- 13: Antennenfußpunkt
- 14: Antennenverstärker
- 15a, 15a': langer Scheibenrand
- 15b, 15b': kurzer Scheibenrand
- 16: Heizstrom
- 17: Heizfeld
- 18: Segment
- 19: Trennlinie
- 20: Maskierungsstreifen
- 21,21',21": weitere Antennenanschlüsse
- 22: Kommunikationsfenster
- 100: Antennenscheibe
- b: Breite des Verbindungsleiters 12
- A-A': Schnittlinie
- d: Breite des Trennbereichs 10, Breite der Trennlinie 19
- g: Abstand des Trennbereichs 10 vom zweiten Antennenanschluss 9
- r: Breite des Randbereichs 7
- Z: Ausschnitt
- II: Scheibenoberfläche der Außenscheibe 2
- III: Scheibenoberfläche der Innenscheibe 3

## Patentansprüche

1. Elektrisch beheizbare Antennenscheibe (100) mindestens umfassend:
- eine transparente Scheibe (1),
- eine elektrische Heizschicht (6), die sich zumindest über einen Teil einer Scheibenfläche (III) erstreckt und die zumindest abschnittsweise als Flächenantenne zum Empfangen und/oder Senden von elektromagnetischen Wellen dient,
- mindestens einen ersten Sammelleiter (5a) und einen zweiten Sammelleiter (5b), die mit einer Spannungsquelle elektrisch verbindbar sind und die mit der Heizschicht (6) in direktem Kontakt elektrisch leitend so verbunden sind, dass nach Anlegen einer Speisespannung ein Heizstrom (16) über ein von der Heizschicht (6) gebildetes Heizfeld (17) fließt,
- einen ersten Antennenanschluss (8), der mit der Heizschicht (6) in direktem Kontakt elektrisch leitend verbunden ist,
- einen zweiten Antennenanschluss (9), der mit einem Abschnitt (11) der Heizschicht (6) in direktem Kontakt elektrisch leitend verbunden ist,
wobei der Abschnitt (11) durch einen heizschichtfreien Trennbereich (10) von der übrigen Heizschicht (6) elektrisch für Gleichströme isoliert ist und der Abschnitt (11) mit der angrenzenden Heizschicht (6) kapazitiv für die Übertragung von Antennensignalen gekoppelt ist.

2. Antennenscheibe (100) nach Anspruch 1, wobei mindestens ein Verbindungsleiter (12) den ersten Antennenanschluss (8) und den zweiten Antennenanschluss (9) galvanisch miteinander verbindet und einen gemeinsamen Antennenfußpunkt (13) aufweist.

3. Antennenscheibe (100) nach Anspruch 2, wobei der Verbindungsleiter (12) auf der Scheibe (1) angeordnet ist, bevorzugt auf einem heizschichtfreien Randbereich (7) der Scheibenfläche (III).

4. Antennenscheibe (100) nach einem der Ansprüche 2 bis 3, wobei der Verbindungsleiter (12) zumindest abschnittsweise als ungeschirmter, linienförmiger Antennenleiter ausgebildet ist und als Linienantenne zum Empfangen von elektromagnetischen Wellen dient.

5. Antennenscheibe (100) nach einem der Ansprüche 1 bis 4, wobei der erste Antennenanschluss (8) oder der zweite Antennenanschluss (9) mit dem ersten Sammelleiter (5a) oder dem zweiten Sammelleiter (5b) in direktem Kontakt elektrisch leitend verbunden ist, wobei bevorzugt der jeweilige erste Sammelleiter (5a) und/oder zweite Sammelleiter (5b) über einen Filter von der Spannungsquelle entkoppelbar ist.

6. Antennenscheibe (100) nach einem der Ansprüche 1 bis 5, wobei der erste Antennenanschluss (8), der zweite Antennenanschluss (9) und/oder der Verbindungsleiter (12) aus einem Metalldraht oder einer Metallfolie bestehen.

7. Antennenscheibe (100) nach einem der Ansprüche 1 bis 5, wobei der erste Antennenanschluss (8), der zweite Antennenanschluss (9) und/oder der Verbindungsleiter (12) aus einer elektrisch leitfähigen Druckpaste bestehen und bevorzugt im Siebdruckverfahren auf derjenigen Scheibenfläche (III) aufgebracht sind, auf der die Heizschicht (6) angeordnet ist.

8. Antennenscheibe (100) nach einem der Ansprüche 1 bis 7, wobei der heizschichtfreie Trennbereich (10) einen Abstand g von 0 mm bis 200 mm, bevorzugt von 0,1 mm bis 100 mm vom zweiten Antennenanschluss (9) aufweist.

9. Antennenscheibe (100) nach einem der Ansprüche 1 bis 8, wobei der Abschnitt (11) eine Fläche von gleich oder weniger als 10%, bevorzugt gleich oder weniger als 5% und besonders bevorzugt von gleich oder weniger als 1% der Fläche der Heizschicht (6) aufweist.

10. Antennenscheibe (100) nach einem der Ansprüche 1 bis 9, wobei die Heizschicht (6) eine Vielzahl flächenförmiger Segmente (18) aufweist, die durch elektrisch isolierende Trennlinien (19) elektrisch unterteilt sind und die Vielzahl der flächenförmigen Segmente (18) bevorzugt an den heizschichtfreien Randbereich (7) angrenzen.

11. Antennenscheibe (100) nach Anspruch 10, wobei jedes der Segmente (18) eine Fläche von 0,1 mm² bis 100,0 mm², bevorzugt von 1,0 mm² bis 50,0 mm² und besonders bevorzugt von 1,0 mm² bis 25,0 mm² aufweist.

12. Antennenscheibe (100) nach Anspruch 10 oder 11, wobei der Verbindungsleiter (12) zumindest abschnittsweise auf den flächenförmigen Segmenten (18) angeordnet ist.

13. Antennenscheibe (100) nach einem der Ansprüche 1 bis 12, wobei der Trennbereich (10) und/oder die Trennlinie (19) eine Breite d von 25 µm bis 300 µm und bevorzugt 30 µm bis 140 µm aufweist.

14. Antennenscheibe (100) nach einem der Ansprüche 1 bis 13, welche als Verbundscheibe mit zwei durch eine thermoplastische Klebeschicht (4) miteinander verbundenen Einzelscheiben (2, 3) ausgeführt ist, wobei sich die Heizschicht (6) auf zumindest einer Oberfläche (II,III) der Einzelscheiben und/oder auf einer Oberfläche eines zwischen den Einzelscheiben angeordneten Trägers befindet.

15. Verfahren zur Herstellung einer elektrisch beheizbaren Antennenscheibe (100), wobei zumindest
a) eine elektrische Heizschicht (6) auf zumindest einem Teil einer Scheibenfläche (III) einer transparenten Scheibe (1) abgeschieden wird,
b) ein Abschnitt (11) der Heizschicht (6) durch einen heizschichtfreie Trennbereich (10) elektrisch für Gleichströme isolierend unterteilt wird, bevorzugt durch Laserabtragung,
c) mindestens ein erster Sammelleiter (5a) und ein zweiter Sammelleiter (5b) auf die Heizschicht (6) aufgebracht werden, wobei die Sammelleiter (5a,5b) in direktem Kontakt elektrisch leitend mit der Heizschicht (6) verbunden werden, so dass nach Anlegen einer Speisespannung aus einer Spannungsquelle an die Sammelleiter (5a,5b) ein Heizstrom (16) über ein von der Heizschicht (6) gebildetes Heizfeld (17) fließen kann,
d) ein erster Antennenanschluss (8) auf die Heizschicht (6) aufgebracht wird und in direktem Kontakt elektrisch leitend mit der Heizschicht (6) verbunden wird,
e) ein zweiter Antennenanschluss (9) innerhalb des Abschnitts (11) auf die Heizschicht (6) aufgebracht wird und in direktem Kontakt elektrisch leitend mit der Heizschicht (6) verbunden wird, wodurch der zweite Antennenleiter (9) kapazitiv für die Übertragung von Antennensignalen an die an den Abschnitt (11) grenzende Heizschicht (6) gekoppelt wird
f) ein Verbindungsleiter (12) auf die Scheibe (1) aufgebracht wird, wobei der erste Antennenanschluss (8) und der zweite Antennenanschluss (9) galvanisch miteinander verbunden werden.

16. Verfahren zur Herstellung einer Antennenscheibe (100) nach Anspruch 15, wobei die Sammelleiter (5a,5b), der erste Antennenanschluss (8), der zweite Antennenanschluss (9) und der Verbindungsleiter (12) durch Siebdruck aus einer elektrisch leitfähigen Druckpaste auf derjenigen Scheibenoberfläche (III), auf der die Heizschicht (6) angeordnet wurde, aufgebracht werden und bevorzugt die Verfahrensschritte c), d), e) und f) gleichzeitig durchgeführt werden.

17. Verwendung Antennenscheibe (100) nach einem der Ansprüche 1 bis 14 als funktionales und/oder dekoratives Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

## Claims

1. Electrically heatable antenna pane (100) comprising at least:
- one transparent pane (1),
- one electrical heating layer (6) that extends at least over a portion of a pane surface (III) and that serves, at least section-wise, as a planar antenna for receiving and/or transmitting electromagnetic waves,
- at least one first busbar (5a) and one second busbar (5b) that are electrically connectable to a voltage source and that are electrically conductingly connected to the heating layer (6) in direct contact such that after application of a supply voltage, a heating current (16) flows over a heating field (17) formed by the heating layer (6),
- one first antenna connection (8) that is electrically conductingly connected to the heating layer (6) in direct contact,
- one second antenna connection (9) that is electrically conductingly connected to a section (11) of the heating layer (6) in direct contact,
wherein the section (11) is electrically isolated against direct currents by a heating-layer-free separation region (10) from the rest of the heating layer (6) and the section (11) is capacitively coupled to the adjacent heating layer (6) for the transmission of antenna signals.

2. Antenna pane (100) according to claim 1, wherein at least one connecting conductor (12) galvanically connects the first antenna connection (8) and the second antenna connection (9) to one another and has a common antenna foot point (13).

3. Antenna pane (100) according to claim 2, wherein the connecting conductor (12) is arranged on the pane (1), preferably on a heating-layer-free edge region (7) of the pane surface (III).

4. Antenna pane (100) according to one of claims 2 through 3, wherein the connecting conductor (12) is implemented at least section-wise as an unshielded, linear antenna conductor and serves as a linear antenna for receiving electromagnetic waves.

5. Antenna pane (100) according to one of claims 1 through 4, wherein the first antenna connection (8) or the second antenna connection (9) is electrically conductingly connected to the first busbar (5a) or to the second busbar (5b) in direct contact, wherein, preferably, the respective first busbar (5a) and/or second busbar (5b) is decoupleable from the voltage source via a filter.

6. Antenna pane (100) according to one of claims 1 through 5, wherein the first antenna connection (8), the second antenna connection (9), and/or the connecting conductor (12) is made of a metal wire or a metal foil.

7. Antenna pane (100) according to one of claims 1 through 5, wherein the first antenna connection (8), the second antenna connection (9), and/or the connecting conductor (12) are made from an electrically conductive printing paste and are preferably applied by the screen printing method on that pane surface (III) on which the heating layer (6) is arranged.

8. Antenna pane (100) according to one of claims 1 through 7, wherein the heating-layer-free separation region (10) has a distance g of 0 mm to 200 mm, preferably of 0.1 mm to 100 mm, from the second antenna connection (9).

9. Antenna pane (100) according to one of claims 1 through 8, wherein the section (11) has an area equal to or less than 10%, preferably equal to or less than 5%, and particularly preferably equal to or less than 1% of the area of the heating layer (6).

10. Antenna pane (100) according to one of claims 1 through 9, wherein the heating layer (6) has a plurality of planar segments (18) that are electrically divided by electrically isolating separation lines (19) and the plurality of planar segments (18) are preferably adjacent the heating-layer-free edge region (7).

11. Antenna pane (100) according to claim 10, wherein each of the segments (18) has an area of 0.1 mm² to 100.0 mm², preferably of 1.0 mm² to 50.0 mm², and particularly preferably of 1.0 mm² to 25.0 mm².

12. Antenna pane (100) according to claim 10 or 11, wherein the connecting conductor (12) is arranged at least section-wise on the planar segments (18).

13. Antenna pane (100) according to one of claims 1 through 12, wherein the separation region (10) and/or the separation line (19) has a width d of 25 µm to 300 µm and preferably 30 µm to 140 µm.

14. Antenna pane (100) according to one of claims 1 through 13, which is implemented as a laminated pane with two individual panes (2, 3) bonded to one another by a thermoplastic adhesive layer (4), wherein the heating layer (6) is situated on at least one surface (II,III) of the individual panes and/or on one surface of a carrier arranged between the individual panes.

15. Method for producing an electrically heatable antenna pane (100), wherein at least
a) one electrical heating layer (6) is deposited on at least one portion of a pane surface (III) of a transparent pane (1),
b) one section (11) of the heating layer (6) is divided electrically isolatingly against direct currents by a heating-layer-free separation region (10), preferably by laser ablation,
c) at least one first busbar (5a) and one second busbar (5b) are applied on the heating layer (6), wherein the busbars (5a,5b) are electrically conductingly connected to the heating layer (6) in direct contact such that after application of a supply voltage from a voltage source on the busbars (5a,5b), a heating current (16) can flow over a heating field (17) formed by the heating layer (6),
d) one first antenna connection (8) is applied on the heating layer (6) and is electrically conductingly connected to the heating layer (6) in direct contact.
e) one second antenna connection (9) is applied within the section (11) on the heating layer (6) and is electrically conductingly connected to the heating layer (6) in direct contact, by which means the second antenna conductor (9) is capacitively coupled to the heating layer (6) bordering the section (11) for the transmission of antenna signals,
f) one connecting conductor (12) is applied on the pane (1), wherein the first antenna connection (8) and the second antenna connection (9) are galvanically connected to one another.

16. Method for producing an antenna pane (100) according to claim 15, wherein the busbars (5a,5b), the first antenna connection (8), the second antenna connection (9), and the connecting conductor (12) are applied by screen printing an electrically conductive printing paste on that pane surface (III), on which the heating layer (6) was arranged, and preferably the process steps c), d), e), and f) are performed simultaneously.

17. Use of an antenna pane (100) according to one of claims 1 through 14 as a functional and/or decorative individual piece and as a built-in component in furniture, devices, and buildings, as well as in means of transportation for travel on land, in the air, or on water, in particular in motor vehicles, for example, as a windshield, rear window, side window pane, and/or glass roof.

## Revendications

1. Plaque d'antenne (100) apte à être chauffée électriquement, comportant au moins :
- une plaque transparente (1) ;
- une couche chauffante électrique (6), qui s'étend au moins sur une partie d'une surface de plaque (III) et qui sert, au moins par sections, d'antenne plane pour la réception et/ou l'émission d'ondes électromagnétiques ;
- au moins une première barre omnibus (5a) et une seconde barre omnibus (5b), qui sont aptes à être reliées électriquement avec une source de tension et qui sont reliées de manière électroconductrice en contact direct avec la couche chauffante (6) de telle sorte qu'après l'application d'une tension d'alimentation, un courant de chauffage (6) circule sur un champ chauffant (17) formé par la couche chauffante (6) ;
- un premier raccordement d'antenne (8), qui est relié de manière électroconductrice en contact direct avec la couche chauffante (6) ;
- un second raccordement d'antenne (9), qui est relié de manière électroconductrice en contact direct avec une section (11) de la couche chauffante (6),
dans laquelle la section (11) est isolée électriquement pour des courants continus de la couche chauffante (6) restante par une zone de séparation (10) sans couche chauffante et la section (11) est couplée de manière capacitive avec la couche chauffante (6) adjacente pour la transmission de signaux d'antenne.

2. Plaque d'antenne (100) selon la revendication 1, dans laquelle au moins un conducteur de liaison (12) relie l'un à l'autre de façon galvanique le premier raccordement d'antenne (8) et le second raccordement d'antenne (9) et présente un point de pied d'antenne commun (13).

3. Plaque d'antenne (100) selon la revendication 2, dans laquelle le conducteur de liaison (12) est disposé sur la plaque (1), de préférence sur une zone de bordure (7) sans couche chauffante de la surface de plaque (III).

4. Plaque d'antenne (100) selon l'une des revendications 2 et 3, dans laquelle le conducteur de liaison (12) est réalisé au moins par sections en tant que conducteur d'antenne linéaire, non blindé, et sert en tant qu'antenne linéaire pour la réception d'ondes électromagnétiques.

5. Plaque d'antenne (100) selon l'une des revendications 1 à 4, dans laquelle le premier raccordement d'antenne (8) ou le second raccordement d'antenne (9) est relié de manière électroconductrice en contact direct avec la première barre omnibus (5a) ou avec la seconde barre omnibus (5b), où, de préférence, la première barre omnibus (5a) et/ou la seconde barre omnibus (5b) sont respectivement aptes à être découplées de la source de tension par un filtre.

6. Plaque d'antenne (100) selon l'une des revendications 1 à 5, dans laquelle le premier raccordement d'antenne (8), le second raccordement d'antenne (9) et/ou le conducteur de liaison (12) sont faits d'un fil métallique ou d'une feuille métallique.

7. Plaque d'antenne (100) selon l'une des revendications 1 à 5, dans laquelle le premier raccordement d'antenne (8), le second raccordement d'antenne (9) et/ou le conducteur de liaison (12) sont faits d'une pâte d'impression conductrice de l'électricité et, de préférence, sont appliqués dans un procédé de sérigraphie sur la surface de plaque (III) respective sur laquelle la couche chauffante (6) est disposée.

8. Plaque d'antenne (100) selon l'une des revendications 1 à 7, dans laquelle la zone de séparation (10) sans couche chauffante présente une distance g de 0 mm à 200 mm, de préférence de 0,1 mm à 100 mm du second raccordement d'antenne (9).

9. Plaque d'antenne (100) selon l'une des revendications 1 à 8, dans laquelle la section (11) présente une surface égale ou inférieure à 10%, de préférence égale ou inférieure à 5 % et, de manière particulièrement préférée, égale ou inférieure à 1 %, de la surface de la couche chauffante (6).

10. Plaque d'antenne (100) selon l'une des revendications 1 à 9, dans laquelle la couche chauffante (6) présente une pluralité de segments plans (18), qui sont divisés électriquement par des lignes de séparation électriquement isolantes (19) et les différents segments plans (18) sont adjacents de préférence à la zone de bordure (7) sans couche chauffante.

11. Plaque d'antenne (100) selon la revendication 10, dans laquelle chacun des segments (18) présente une surface de 0,1 mm² à 100,0 mm², de préférence de 1,0 mm² à 50,0 mm² et, de manière particulièrement préférée, de 1,0 mm² à 25,0 mm².

12. Plaque d'antenne (100) selon l'une des revendications 10 ou 11, dans laquelle le conducteur de liaison (12) est disposé au moins par sections sur les segments plans (18).

13. Plaque d'antenne (100) selon l'une des revendications 1 à 12, dans laquelle la zone de séparation (100) et/ou la ligne de séparation (19) présentent une largeur d de 25 µm à 300 µm et, de préférence, de 30 µm à 140 µm.

14. Plaque d'antenne (100) selon l'une des revendications 1 à 13, laquelle est réalisée en tant que vitre feuilletée comportant deux vitres individuelles (2, 3) reliées l'une à l'autre par une couche d'adhésif thermoplastique (4), la couche chauffante (6) se trouvant sur au moins une surface supérieure (II, III) des vitres individuelles et/ou sur une surface supérieure d'un support disposé entre les vitres individuelles.

15. Procédé de fabrication d'une plaque d'antenne (100) apte à être chauffée électriquement, dans lequel au moins
a) une couche chauffante électrique (6) est déposée sur au moins une partie d'une surface de plaque (III) d'une plaque transparente (1) ;
b) une section (11) de la couche chauffante (6) est divisée de manière électriquement isolante pour des courants continus par une zone de séparation (10) sans couche chauffante, de préférence par ablation laser ;
c) au moins une première barre omnibus (5a) et une seconde barre omnibus (5b) sont appliquées sur la couche chauffante (6), les barres omnibus (5a, 5b) étant reliées à la couche chauffante (6) de manière électroconductrice en contact direct, de telle sorte qu'après application d'une tension d'alimentation provenant d'une source de tension sur les barres omnibus (5a, 5b), un courant de chauffage (16) peut circuler sur un champ chauffant (17) formé par la couche chauffante (6) ;
d) un premier raccordement d'antenne (8) est appliqué sur la couche chauffante (6) et est connecté avec la couche chauffante (6) de manière électroconductrice en contact direct ;
e) un second raccordement d'antenne (9) est appliqué sur la couche chauffante (6) à l'intérieur de la section (11) et est relié avec la couche chauffante (6) de manière électroconductrice en contact direct, ce par quoi le second raccordement d'antenne (9) est couplé de façon capacitive sur la couche chauffante (6) délimitant la section (11) pour la transmission de signaux d'antenne ;
f) un conducteur de connexion (12) est appliqué sur la plaque (1), le premier raccordement d'antenne (8) et le second raccordement d'antenne (9) étant reliés l'un à l'autre de façon galvanique.

16. Procédé de fabrication d'une plaque d'antenne (100) selon la revendication 15, dans lequel les barres omnibus (5a, 5b), le premier raccordement d'antenne (8), le second raccordement d'antenne (9) et le conducteur de liaison (12) sont appliqués par sérigraphie à partir d'une pâte d'impression conductrice de l'électricité sur la surface de plaque (III) sur laquelle la couche chauffante (6) a été appliquée et, de préférence, les étapes de procédé c), d), e) et f) sont effectuées simultanément.

17. Utilisation d'une plaque d'antenne (100) selon l'une des revendications 1 à 14, en tant qu'élément individuel fonctionnel et/ou décoratif et en tant que composant dans du mobilier, des appareils et des bâtiments, ainsi que dans des moyens de transport pour le transport sur terre, dans les airs ou dans l'eau, en particulier dans des véhicules automobiles, par exemple en tant que pare-brise, vitre arrière, vitre latérale et/ou toit vitré.
